(19) Europäisches Patentamt / European Patent Office / Office européen des brevets

(11) **EP 4 181 686 B1**

(12) **EUROPEAN PATENT SPECIFICATION**

(45) Date of publication and mention
of the grant of the patent:
**22.04.2026 Bulletin 2026/17**

(21) Application number: **21746579.8**

(22) Date of filing: **15.07.2021**

(51) International Patent Classification (IPC):
*A23J 1/00* (2006.01)      *A23J 1/14* (2006.01)
*A23J 3/26* (2006.01)      *A23J 3/22* (2006.01)

(52) Cooperative Patent Classification (CPC):
**A23J 1/005; A23J 1/142; A23J 3/225; A23J 3/227;
A23J 3/26**

(86) International application number:
**PCT/NL2021/050445**

(87) International publication number:
**WO 2022/015165 (20.01.2022 Gazette 2022/03)**

(54) **TEXTURIZED OILSEED PROTEINACEOUS MATERIAL**

TEXTURIERTES ÖLSAATPROTEINHALTIGES MATERIAL

MATIÈRE PROTÉIQUE TEXTURÉE DE GRAINES OLÉAGINEUSES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.07.2020 EP 20305816**

(43) Date of publication of application:
**24.05.2023 Bulletin 2023/21**

(73) Proprietors:
• **Wageningen Universiteit**
  **6708 PB Wageningen (NL)**
• **Avril**
  **75008 Paris (FR)**

(72) Inventors:
• **JIA, Wanqing**
  **6708 GA Wageningen (NL)**
• **VAN DER GOOT, Atze Jan**
  **6717 TR Ede (NL)**
• **RODRIGUEZ-ALONSO, Elvira**
  **38600 Fontaine (FR)**
• **BIANEIS, Marine**
  **35650 Le Rheu (FR)**

(74) Representative: **V.O.**
**P.O. Box 87930**
**2508 DH Den Haag (NL)**

(56) References cited:
**EP-A1- 0 010 798      EP-B1- 2 783 576
WO-A1-2021/014053      WO-A1-88/04526
WO-A2-2011/053786      GB-A- 1 516 358
US-A- 5 300 312         US-A1- 2010 136 173**

**Description**

1 FIELD

The invention relates to methods for texturizing concentrated oilseed proteinaceous material from oilseeds, including seeds from Brassicaceae. The invention further relates to the texturized product thus obtained, and its application in edible products.

2 INTRODUCTION

Plant proteins from oilseeds and legumes constitute an alternative to animal proteins. Rapeseed is one of the major crops cultivated for oil production. Recently, the utilization of rapeseed oil for biodiesel generation was enhanced and generates an increasing production of rapeseed worldwide (Ivanova et al., 2016. Agricul Science Proc 10: 55-62; George and Loeser, 2019. USDA, September). The resulting by-product is rapeseed meal after oil pressing and solvent extraction, which is mostly used for cattle feed. Oil is in general removed during the process by extraction with a suitable solvent such as n-hexane or iso-hexane, followed by removal of the solvent for example by flash desolventizing. For example, granted patent US 9,351,514 B describes deoiling of rapeseed cake with hexane as a necessary step to reduce the amount of oil to less than 6 wt % based on the dry mass, followed by aqueous-alcoholic extraction to reduce the amounts of sugar and secondary plant substances.

A total production of rapeseed meal was 38 million metric tons in 2018 worldwide. (Laguna et al., 2018. Industrial Crops Products 118: 160-172; George and Loeser, 2019. USDA, September). The residue has a high protein content and well-balanced amino acid composition, with high quantities of indispensable amino acids (AA) ( > 100 mg/g protein) and particularly sulfur AA (40-49 mg/g protein) (Bos et al., 2007. J Nutrition 137: 594-600; Citeau et al., 2019. OCL 26: 1-5).

Rapeseed protein is mainly composed of two predominant classes of seed storage proteins: salt soluble 12S globulins (cruciferin) and water soluble 2S albumins (napin) (Bérot et al., 2005. J Chrom B 818: 35-42). Cruciferin is stabilized by non-covalent bonds, whereas napin is stabilized primarily by disulfide bonds. Both proteins reveal good thermal stability; cruciferin has a denaturation temperature of 91°C and napin presents a denaturation temperature of 110°C (Wu and Muir, 2008. J Food Science 73: C210-C216; Yang et al., 2014. Hydrocolloids 40: 225-236).

Despite excellent nutritional value, the presence of anti-nutritional components makes rapeseed meal less suitable for food purposes. Anti-nutritional components, such as phenolic compounds, flavonoids and phytates are responsible for bitter taste, astringency and/or dark color formation (Das Purkayastha et al., 2014. J Agricul Food Chem 62: 7903-7914 ; Hald C. et al., 2019. J Agric Food Chem 67: 372-379). Phenolic compounds show chemical affinity towards proteins through hydrophobic, ionic and covalent bonding, which lead to protein-phenol complex formation during processing (Alu'datt et al., 2014. Food Chem146: 608-613). The complex formation has an impact on the digestibility and functionality of the rapeseed protein (Tan et al., 2011. J Food Science 76: R16-28). Further, the retained partial rapeseed hulls in the meal contain indigestible fibers such as lignin and cellulose (Carré et al., 2016. OCL 23: A302.). Therefore, it is desirable to fractionate rapeseed protein and remove the antinutrients as much as possible prior to human consumption (Das Purkayastha et al., 2014. J Agricul Food Chem 62: 7903-7914).

Various studies have reported different fractionation methods to obtain pure rapeseed protein isolates. Solvents are often applied for fractionation including water, salt solution, alkaline and organic solutions. Direct alkaline purification followed by acid precipitation is commonly being used. A method reported by Tan et al. included extraction, ultrafiltration, dilution and precipitation (Tan et al., 2011. Food Res Int 44: 1075-1082). Ultrafiltration has been widely applied in industry as a selective method to retain high molecular weight proteins, while allowing small molecules to pass through (Dong et al., 2011. J Science Food Agriculture 91: 1488-1498). Dry fractionation was reported to produce protein-rich fractions in a concentration of 45% and 55% (Campbell et al., 2016. Plants 5: 17). However, these methods aim to obtain pure protein fractions regardless of the phenol removal. The use of mixtures of water and organic solvent has been reported to extract isoflavones from various sources and phenolic compounds from oilseeds (Kozlowska et al., 1983. Food Nahrung 27: 449-453). Among all organic solvents, hydro-ethanol is preferred as a green solvent because of its low toxicity, though it is not as effective towards extraction of phenolic compounds when compared to other solvents such as hydro-methanol (González-Pérez et al., 2002. J Agricul Food Chem 50: 1713-1719). The protein extractability after the hydroethanol treatment is reduced, which limits further protein purification with low protein recovery (Citeau et al., 2019. OCL 26: 1-5).

The functional properties of protein fractionation have an intimate relationship with the type of proteins recovered and the type of processing involved (Campbell et al., 2016. 2015. Plants 5: 17). Up to now, little is known about the impact of processing conditions during rapeseed protein fractionation on the functional properties of the proteins. EP0010798A1 discloses a process for producing a foodstuff with a fibrous structure which comprises: a) producing a mixture mainly consisting of (i) 50-80 wt.% of a vegetable protein-containing material having a protein content of at least 25%, (ii) 20-50 wt.% water, (iii) 0.5-8 wt.% lipids and (iv) an effective proportion of an edible agent imparting toughness to the protein material; b) extruding said mixture while ensuring that an extrudate is obtained having a moisture content of at least 30 wt.%; c) shredding said extrudate; d) incorporating the shreds in a protein binder, and e) heat-setting the mixture consisting of binder and shreds.

There is thus a need for methods that allow incorporation of protein that is extracted and purified from rapeseed meal after oil pressing.

## 3 BRIEF DESCRIPTION OF THE INVENTION

Oilseed concentrates were fractionated by hydro-ethanol washing treatment. The functional properties were characterized thereafter for physicochemical properties of protein thermal stability, nitrogen solubility index (NSI), water hydration capacity (WHC), particle hydration properties, and rheological properties during heating and oscillation.

In an embodiment, the invention provides a process for the preparation of fibrous proteinaceous structures according to claim 1.

No-hexane, preferably no alkane, more generally no non-polar solvent is used in a process of the invention. The oilseed, the pressed oilseed (i.e., oilseed press cake), and more generally the product obtained according to the processes of the invention, have not been treated with a non-polar solvent. In particular the oilseed, the pressed oilseed (i.e., oilseed press cake), and more generally the product obtained according to the process of the invention were not treated with hexane. Thus, the product obtained by employing the methods of the invention is not contacted with such a solvent at any time during the process and the process does therefore not include the use of such a compound or compounds. Hence a protein concentrate of the invention preferably has less than 10 mg/kg, advantageously less than 5 mg/kg and more preferably virtually no residual and/or only trace amounts (e.g. less than 1 mg/kg) of an alkane such as hexane.

Said seed protein concentrate is preferably obtained from oilseed that is dehulled, prior to and/or following extraction with a hydro-alcohol such as hydroethanol.

A Brassicaceae oilseed preferably is pressed, prior to extraction of the press cake with hydro-alcohol.

Said extracted seed protein concentrate preferably has a nitrogen solubility index below 40%.

In a process according to the invention, extracted seed protein concentrate preferably is mixed with an aqueous solution, preferably water, prior to texturizing said concentrate.

In a process according to the invention, the extracted seed protein concentrate preferably is mixed with other edible proteinaceous material and/or carbohydrates prior to texturizing said concentrate, preferably with gluten, hemp protein, fava bean protein, pea protein, soy protein and/or pectins.

In a preferred process according to the invention, the extracted oilseed protein concentrate has a protein content based on the dry mass (N x 6.25) in a range of 40% to less than 70%, preferably from 50% to 69% on dry matter w/w, in particular between 50% and 65%.

In a preferred process according to the invention the extracted oilseed seed protein concentrate has a cell wall polysaccharide content such as pectins, hemicellulose and cellulose, based on the dry mass in a range of 5% to 60%, preferably in a range of 5% to 50%. Said extracted oilseed protein concentrate preferably has less than 1% (w/w), in particular less than 0.5% (w/w), based on dry mass, of mono or disaccharides, and less than 1% (w/w), in particular less than 0.5% (w/w), based on dry mass, oligo-saccharides such as raffinose oligosaccharides, stachyose and verbascose.

In a preferred process according to the invention the extracted oilseed seed protein concentrate has a $D_{50}$ which may range from 10 $\mu$m to 300 $\mu$m, preferably from 10 $\mu$m to 200 $\mu$m. It is further preferred that the powder also presents a $D_{90}$ ranging from 50 $\mu$m to 500 $\mu$m, preferably 50 $\mu$m to 300 $\mu$m, in particular from 50 $\mu$m to 180 $\mu$m. These values are measured with Malvern equipment by laser diffraction using dry dispersion method (i.e. the particles are dispersed in air).

In a preferred process according to the invention, the step of texturizing is performed by extrusion and/or by shear cell technology.

In a preferred process according to the invention the extracted oilseed protein concentrate has a water holding capacity of at least 2 gram water per gram of dry mass extracted seed protein concentrate, preferably at least 3 gram water per gram of dry mass extracted seed protein concentrate.

The invention further provides a fibrous proteinaceous structure according to claim 11.

Said fibrous proteinaceous structure preferably has a Young's modulus between 600 and 1000 kPa.

Said fibrous proteinaceous structure preferably has an anisotropy ratio greater than 1, preferably greater than 1,5.

Said fibrous proteinaceous structure is preferably obtained or obtainable by a process of the invention.

The invention further provides an edible product according to claim 15. Said edible product preferably is a foodstuff, a feedstuff, a meat-like product, or an ingredient for food- or feed-stuff.

The invention further provides a use of the fibrous proteinaceous structure according to the invention in the manufacture of an edible product, preferably in the manufacture of a meat replacer.

4 FIGURE LEGENDS

Figure 1. A) Overview of tensile test specimen cutting in parallel and perpendicular direction. B) Specimen dimensions in mm; Gage length (15.5); Initial grip separation (25.0).

Figure 2. Tensile stress (A), tensile strain (B) and Young's modulus (C) of the RPC1 of 40 wt %, and tensile stress (D), tensile strain (E) and Young's modulus (F) of the RPC2 of 40 wt % are shown. Symbol ■ indicates parallel direction, symbol ▨ indicates perpendicular direction and symbol □ indicates anisotropic index.

Figure 3. Macro structure of the sheared samples from pure RPC1 and RPC2 of 40 wt % from 120°C to 150°C, as indicated.

Figure 4. Macro structure of the sheared samples from RPC1-WG and RPC2-WG of 40 wt % from 95°C, 120°C, 130°C and 140°C, as indicated.

Figure 5. Tensile stress (A), tensile strain (B) and Young's modulus (C) of RPC1-WG of 40 wt %, and tensile stress (D), tensile strain (E) and Young's modulus (F) of RPC2-WG of 40 wt % are shown. Temperatures of 95°C, 120°C, 130°C and 140°C were tested. Symbol ■ indicates parallel direction, symbol ▨ indicates perpendicular direction and symbol □ indicates anisotropic index.

Figure 6. Fibrous structure of RPC2-WG mixtures at RPC ratios of 0%, 20%, 35%, 50%, 65%, 80% and 100%, under shearing conditions of 140°C, 30 rpm and 15 min with the mixture of 40 wt %.

Figure 7. Tensile stress, tensile strain and Young's modulus of the RPC2-WG at the RPC ratios of 0%, 20%, 35%, 50%, 65%, 80% and 100% are shown. Shearing conditions of 140°C, 30 rpm and 15 minutes were tested. Symbol ■ indicates parallel direction, symbol ▨ indicates perpendicular direction and symbol □ indicates anisotropic index.

Figure 8. (A) X-ray microtomography images of a reconstructed trimetric image of the solid of RPC2-WG product with the RPC2 ratio of 0, 20%, 50%, 80%, 100% at 140 °C, and a reconstructed trimeric image of the air with the same samples. (B) The amount of air incorporated was calculated as the porosity volume of the sample.

Figure 9. Microstructure of the sheared samples from RPC2 and RPC2-WG mixtures (1:1) at different temperatures of 95°C, 120°C and 140°C were visualized by confocal laser scanning microscope (CLSM), RPC2 samples were obtained from shear temperatures of 120°C, 140°C and 150°C with protein and carbohydrates shown. The scale of each picture was 200 $\mu$m, and each picture was selected out of three pictures.

Figure 10. Structure formation and air inclusion (A) and porosity of sheared and non-sheared samples at the indicated temperatures (B).

Figure 11. Rheological properties of hexane-treated and non hexane treated rapeseed protein concentrates at anisothermal (A) and isothermal conditions (B).

Figure 12. Particle size distribution during hydration of hexane-treated (A) and non hexane treated (B) fractions.

Figure 13. Denaturation curves of hexane-treated and non hexane treated fractions.

Figure 14. Extrusion experiments. Results from two different experiments are shown. A: experiment 1 with lamella structure and long wedge length. B: experiment 2 with a more porous lamella structure.

5 DETAILED DESCFRIPTION OF THE INVENTION

*5.1 Abbreviations*

Nitrogen solubility index: NSI
Water hydration capacity: WHC.
Rapeseed protein concentrate: RPC.
Hexane followed by hydro-ethanol-extracted RPC: RPC1.
Hydro-ethanol extracted RPC: RPC2.
Dry matter content: DM.
Wheat gluten (or gluten): WG.

*5.2 Definitions*

The term "oilseed", as is used herein, refers to a seed from an oil plant from the family Brassicaceae. Advantageously, the oilseed used is from a species selected from the group consisting of *Brassica campestris, Brassica carinata* (Abyssinian mustard), *Brassica hirta* (yellow mustard), *Brassica juncea* (Indian mustard), *Brassica napus* (rapeseed or canola), *Brassica nigra* (black mustard), *Brassica oleracea, Brassica rapa,* preferably from *Brassica napus, Brassica juncea, Brassica carinata,* and crosses thereof.

The term "proteinaceous", as is used herein refers to a material that comprises biomolecules consisting of one or more polypeptide chains such as proteins. Said material preferably comprises 50-100 % (w/w) of proteins, more preferably 80-100 % (w/w).

The term "fibrous proteinaceous structure, as is used herein, refers to proteinaceous material that forms filaments such as fibers. For example, meat is composed of myofilaments that are surrounded and supported by collagen and elastin fibers. Meat tenderness is strongly related to the spatial organization of these fibers. The water held between the fibers is connected to the juiciness of meat. Fibrous proteinaceous structures, generated for example from globular proteins such as plant proteins, try to mimic these fibrous meat structures.

The term "other edible proteinaceous material", as is used herein refers to any edible proteinaceous material from any source, including animal, plant, algae, bacterial, fungal origin, or a mixture thereof.

The term "hydro-alcohol" or "hydrous-alcohol solvent", as used herein, refers to an aqueous solution comprising a lower (C1 to C3) aliphatic alcohol, such as ethanol, isopropanol, methanol, or a mixture thereof. Ethanol and isopropanol are particularly preferred. Ethanol is more particularly preferred. The alcohol concentration preferably ranges from 60% w/w to the alcohol azeotrope (i.e. the water/alcohol azeotrope, that is ~96% w/w for ethanol), preferably from 65% w/w to the alcohol azeotrope (i.e. the water/alcohol azeotrope).

The term "texturizing", as is used herein, refers to methods to induce a fibrous structure in an essential globular proteinaceous molecule. Texturizing may be performed by methods known in the art such as extrusion, including high moisture extrusion, shear cell technology, 3D printing, spinning, or a combination thereof.

The term "dehull" and conjugations thereof, as used herein, refers to the removal of the hull from oilseed. A dehulling step produces a "dehulled oilseed" or oilseed kernels. A "partially dehulled oilseed" indicates that the oilseed have a hull content of less than 35% (w/w), preferably less than 20% (w/w), preferably less than 15% (w/w) of the initial hull content of the whole oilseed, in particular for *Brassicaceae* seeds. Oilseed may also be completely dehulled.

The term "defat", as is used herein, refers to the at least partially removal of fatty compounds, preferably by squeezing the oilseed under high pressure, for example by a full press extraction process and/or by hydrous alcohol solvent extractions.

The term "nitrogen solubility index (NSI)", as is used herein, is used herein as a measure for the percentage of water soluble proteinaceous material. For example, if 75% of the total nitrogen contained in a protein is water soluble, then the NSI is 75.

The term "cell wall polysaccharide", as is used herein, refers to polysaccharides that are present in the cell wall of oilseed. These polysaccharides include cellulose, hemi-cellulose, pectic polysaccharides, lignin, and xyloglucans.

The term "water holding capacity", also termed water hydration capacity (WHC)", as is used herein, refers to the water hydration capacity of a material. The water holding capacity is expressed as the maximum amount of water that 1 g of material will imbibe and retain under low-speed centrifugation. Physicochemical tests to determine the water holding capacity are known in the art, and include International Approved Methods of Analysis (AACC) method 56-30.01, Water Hydration Capacity of Protein Materials.

The term "tensile stress", as is used herein, refers to a force that can be applied over an area which acts perpendicular to the surface of the object, attempting to elongate it. The force is expressed in Newtons per square meter, also known as Pascal (Pa). Tensile strain can be expressed mathematically by the formula:

$$\text{True strain } \varepsilon_t \text{ (-) } \varepsilon_t = ln\left(\frac{L}{L_0}\right) \text{ (Equation I)}$$

with $L_0$ initial length of the specimen (cm), $L$ length of the specimen at break (cm).

The term "tensile strain", as is used herein, refers to the deformation or elongation of a solid body due to the application of a tensile stress. Tensile strain can be expressed mathematically by the formula

$$\text{True stress } \sigma_t \text{ (Pa) } \sigma_t = \frac{F}{A_0}\frac{L}{L_0} \text{ (Equation II)}$$

with F Force at specimen break (N), $A_0$ initial cross section of the sample, $A$ cross section of the sample at break.

The term "Young's modulus", as is used herein, refers to the resistance of a material to elastic deformation. In other words, the term refers to the stiffness of a material.

The term "anisotropy ratio", as is used herein, refers to ratio of the tensile strengths of a product parallel and perpendicular to the shear flow. As is known to a skilled person, an anisotropy index of a product can be determined by providing samples that were cut parallel and perpendicular to the shear direction.

Deformation can be quantified by calculating the ratio of anisotropy index (AI) $AI\tau = \tau_{\parallel}/\tau_{\perp}$, where $\tau_{\parallel}$ and $\tau_{\perp}$ represent the tensile stress parallel and perpendicular to the shear flow, respectively, and $AI\sigma = \sigma_{\parallel}/\sigma_{\perp}$, where $\sigma_{\parallel}$ and $\sigma_{\perp}$ are the tensile strains parallel and perpendicular to the shear flow, respectively. An anisotropy index is provided by the ratio $AI\tau/AI\sigma$. A fibrous proteinaceous structure preferably has an anisotropy ratio greater than 1, more preferred greater than 1.25, even more preferred greater than 1.5, preferably greater than 2.

*5.3 Protein concentrate from oilseed*

It has now been surprisingly found that protein concentrate from oilseed extracted with hydro-alcohol can be used for texturizing the protein concentrate at a temperature between 130 °C and 160 °C.

Although hydrous alcohol solvent extraction led to undesired functionalities such as protein denaturation and reduced solubility, the resulting defatted material was surprisingly found not to be detrimental for enhancing functional properties in a subsequent texturizing step. Therefore, rapeseed concentrates produced through hydro-alcohol washing have potential to be transformed into fibrous materials.

A process for producing a protein concentrate from oilseed from the family Brassicaceae, comprises the successive steps of providing a presscake from at least partially dehulled oilseed; washing said presscake by mixing it with a first hydrous-alcohol solvent to obtain a washed presscake and separating said washed presscake from said first hydrous-alcohol solvent to obtain a separated washed presscake; and washing said separated washed presscake by mixing it with last hydrous-alcohol solvent to obtain a protein-containing solid and separating said protein-containing solid from said last hydrous-alcohol solvent to obtain a protein concentrate. Such a process allows obtaining a high quality concentrate on an industrial scale.

A distinction between protein "concentrates" and protein "isolates" is made based on the production method used and the resulting protein content. Protein isolates have a very high protein content of at least 80% compared to (vegetable) plant protein concentrates with a protein content between 50% and 79%. Usually, to prepare protein isolates, the proteins are dissolved in water and then isolated from the aqueous solution, for example by acid precipitation. They therefore have an altered amino acid profile and altered nutritional and techno-functional properties over protein concentrates.

The press cake used is obtained from at least "partially" dehulled oilseed. Processing steps of oilseed dehulling are well known in the art (Matthäus, 2012. In: S.K. Gupta (ed.), Technological Innovations in Major World Oil Crops, Volume 2: Perspectives, New York: NY Springer Science and Business Media, LLC, pp 23-92). One can use a dehuller such as a disc sheller or impact huller or roller mill. The dehulling step includes removing the hull from the oilseed. The dehulling step produces a "dehulled oilseed" or oilseed kernels. At an industrial scale, the dehulling is generally partial and such starting material is preferred. By "partially dehulled oilseed", it is meant that the oilseed has a hull content (w/w) of less than 35% w/w, preferably less than 20% w/w, preferably less than 15% w/w; and by order of increasing preference, less than 10% w/w, less than 9% w/w, less than 8% w/w, less than 7% w/w, less than 6% w/w, less than 5% w/w, less than 4% w/w, less than 3% w/w, less than 2% w/w, less than 1% w/w of the initial hull content of the whole oilseed, such as 0.01-1% w/w, in particular for Brassicaceae seeds. The oilseed may be completely dehulled. The choice of such a not over-processed material allows to reduce the processing costs while achieving the required quality in the concentrate.

Oilseed kernels or dehulled seed can advantageously be cracked into smaller particles and then possibly flattened into thin flakes, especially if they are cooked before screw pressing. Processing steps of oilseed flaking are well known in the art (Unger, 1990. Commercial Processing of Canola and Rapeseed: Crushing and Oil Extraction. In: Shahidi F. (eds) Canola and Rapeseed. Springer, Boston, MA, pp 235-249; Matthäus, 2012. In: S.K. Gupta (ed.), Technological Innovations in Major World Oil Crops, Volume 2: Perspectives, New York: NY Springer Science and Business Media, LLC, pp 23-92). In certain embodiments, the oilseed can be preheated before flaking at a temperature generally ranging from 30°C to 50°C. The flaking step produces a "flaked oilseed". The flaking step is achieved in a flaking mill, through flaking rolls, as is known to a person skilled in the art.

Cooking of partially or completely dehulled oilseed is known in the art (Unger, 1990. Commercial Processing of Canola and Rapeseed: Crushing and Oil Extraction. In: Shahidi F. (eds) Canola and Rapeseed. Springer, Boston, MA, pp 235-249; Matthäus, 2012. In: S.K. Gupta (ed.), Technological Innovations in Major World Oil Crops, Volume 2: Perspectives, New York: NY Springer Science and Business Media, LLC, pp 23-92). Preliminary cooking of the oilseed modifies the mechanical properties of the oilseed and reduces the viscosity of the oil droplets. It therefore enhances the pressing and improves the extractability of oil from the oilseed. The cooking step is achieved in a cooker. Typically, the cooking temperature is ranging from 30°C to 110°C, preferably from 65°C to 90°C and more preferably from 75°C to 88°C. These is particularly suitable to Brassicaceae seeds. The retention time in the cooker may vary for example from 20 min to 40 min.

In a preferred method, the pressing step of the oilseed is a cold-pressing step and the oilseed is preferably not cooked (as defined above) prior to its passing through the press. This embodiment allows to obtain protein extracts wherein the proteins are even closer to their natural conformation.

The pressing process is preferably achieved (mechanically) in a press, preferably a screw press in one step (full pressing), two steps (double pressing) or more steps. A preferred screw press is a barrel-type screw press with vertically split hinged barrel, such as the type commercially available from CPM SKET GmbH (Germany) or a continuous screw press as the MBU series of presses sold by the French Company OLEXA (France).

Processing steps of oilseed pressing are well known in the art Unger, 1990. Commercial Processing of Canola and Rapeseed: Crushing and Oil Extraction. In: Shahidi F. (eds) Canola and Rapeseed. Springer, Boston, MA, pp 235-249; Matthäus, 2012. In: S.K. Gupta (ed.), Technological Innovations in Major World Oil Crops, Volume 2: Perspectives, New York: NY Springer Science and Business

Media, LLC, pp 23-92). The pressing process includes partially removing the oil from the oilseed, i.e., removing at least 60% of the oil from the oilseed, preferably at least 70%. The residual oil content (R.O.C.) preferably is between 8 and 20 % (w/w), preferably between 9 and 13 % (w/w), such as about 11 % (w/w).

In an embodiment, the moisture content of the oilseed at the inlet of the first press, or before pressing, is controlled to be from 2% to 8% (w/w), in particular from 5% to 8% (w/w). Hence, a step of moisturizing and/or drying the oilseed prior to carrying out the pressing step may be included in order to achieve the advantageous moisture content. A drying step can be particularly suitable when, for example, when the oilseed is stored under particular cold (e.g. winter) or wet conditions.

Pressing is preferably performed at a temperature of between 20 °C and 110 °C. Advantageously, the temperature within the press and/or of the resulting oilseed press cake at the press outlet ranges from 50 °C to 110 °C, preferably 65°C to 88°C. The pressing step produces an "oilseed presscake", also named "oilseed expeller".

The oilseed press cake can have an oil content ranging from 3% to 25% dry w/w. The oil content of the oilseed presscake depends on the moisture and the temperature of the oilseed during the pressing, or the number of pressing steps, or the thermal process applied. By way of example, the oilseed press cake can have an oil content ranging from 4% to 25% dry w/w, in particular from 5% to 14% dry w/w, and even more preferably from 6% to 13% dry w/w, (e.g. 8 to 12% dry w/w), determined by the Soxhlet extraction method (ISO734:2016). Advantageously such oil content is obtained by pressing at a temperature of 90°C or less.

The oilseed press cake can have a protein content of less than 50% dry w/w, preferably between 5% and 45% dry w/w, such as between 10% and 40% dry w/w, preferably between 20% and 35% dry w/w, such as about 30% dry w/w, or about 35% dry w/w. The dry w/w percentage, or Dry Matter (DM) protein content, preferably is determined by the Dumas method (N x 6.25) using a DUMATHERM apparatus (Gerhardt GmbH & CO KG (Königswinter, Germany)) according to (Norme AFNOR) NF EN ISO 16634-1.

The oilseed press cake is subsequently extracted with successive hydrous-alcohol solvents having increasing alcohol concentrations. As first extraction step, preferably a concentration ranging from 60 % to 75% (w/w) alcohol is used, up to a concentration of alcohol of the final solvent that is close, or equal, to the alcohol azeotrope, which is for example 96% w/w for ethanol, and 88% w/w for isopropanol.

The washing steps can be a continuous process carried out by using a conventional extractor apparatus used to extract fat from oilseeds. For example the hydrous-alcohol solvent may percolate through the oilseed press cake which is positioned on a perforated belt which travels horizontally. Miscella percolates through the belt and falls into compartments in the bottom of the extractor housing, where it is picked up by a series of pumps and recirculated counter currently at the required increasing concentration to the press cake. For another example the extraction may be carried out by using a solvent immersion extractor wherein the press cake is continuously convoyed through the extractor in counter current mode with the solvent.

It is further preferred that more than two washing steps be carried out. The number of washing steps is correlated with the purity of the product to be achieved. The number of washing steps can for example be up to 10, preferably up to 6, in particular about 4, including 3 and 5. When 4 washing steps are used, the alcohol concentration of the solvent can range for the first washing step from 60% to 70% w/w, preferably about 65% w/w, from 65% to 75%, preferably about 70% w/w, for the second step, from 75% w/w to 85 % w/w, preferably 80%, for the third step, to about 88% (w/w) for isopropanol and about 96% w/w for ethanol in the final step.

The pH of the hydrous-alcohol solvent preferably ranges from 3.0 to about 6.5 - 7, preferably from 3.5 to 5.0, most preferably from 4.5 to 5.0. In order to adjust the pH of the hydrous-alcohol solvent, a component acting as a pH regulator such as an acid or a base, for example an acetate buffer, a citrate buffer or a phosphate buffer, can be added to keep the pH at the preferred interval.

The temperature within the reactor (i.e. at which the washing takes place) preferably ranges from 50°C to 70°C, preferably 62°C to 68°C, in particular when the alcohol is ethanol or isopropanol.

The ratio between the hydrous-alcohol solvent and the press cake (or washed pressed cake) preferably ranges from 5:1 to 13:1 w/w, preferably from 6:1 to 10:1 w/w.

The resident time of the press cake with the hydrous-alcohol solvent during the washing step preferably ranges from 10 minutes to 90 minutes, preferably around 60 to 70 minutes.

Once the final washing step has been carried out, the hydrous alcohol solvent is separated from the extracted press cake, preferably is entirely removed from the extracted press cake, leaving only traces of the last hydrous alcohol solvent (e.g. less than 1% w/w) in the protein concentrate obtained. The solvent desolventizing step may be carried out under partial vacuum, vacuum paddle dryer, a drying stove or a laminar flow hood. As an example, the resident time of the oilseed meal in the desolventizer may range from 100 minutes to 140 minutes (min), preferably about 120 min. The temperature preferably is lower than 80°C, for example between 60 and 70°C, preferably for about 120 ± 10 mins. The oilseed protein concentrate may be dried to reach a moisture content ranging from 7% to 10%, preferably around 5% (w/w).

The dry oilseed protein concentrate may be subjected to at least one sieving (or sorting) step optionally preceded by at least one milling or deagglomerating step. This optional sieving step allows to increase the protein content and decrease the fiber and/or hull content of the oilseed protein concentrate. Although the oilseed are dehulled, this dehulling is generally partial to some extent. Hence the sieving step allows removing any traces of hulls that form black spots (visible to the naked eye) in the dry oilseed protein concentrate, which may be not compatible with an application in food industry. Sieving technology is well known in the art. For example, one can use sieves or a plansifter machine, a turbo-separator or a triboseparator. Suitable apparatuses are sold, for example, by the companies Mogensen or Stolz. The increase in protein content and the reduction in insoluble polysaccharides, such as cellulose, of the oilseed protein concentrate can be obtained by collecting fractions having a particle size of less 500 $\mu$m, preferably of less than 300 $\mu$m, although fractions having a particle size of less than 250 $\mu$m and even less than 150 $\mu$m can be considered. The maximum particle size of the fraction is determined by the use of corresponding sieves.

The dry concentrate can subsequently be milled and sieved at least once. The fraction which is not small enough and is retained in the sieve may then be subjected to additional milling and sieving steps. These steps can be repeated several times, such as at least 4 and preferably 6 times.

When the oilseed protein concentrate is a rapeseed protein concentrate, obtained or obtainable by the process of the present invention, then it has a cellulose content from 6% to 12% dry w/w, preferably from 8% to 10% dry w/w.

Soluble protein content of the resultant oilseed protein concentrate in general is below 40%, such as below 30%, or below 20%. The soluble protein content of the resultant oilseed protein concentrate preferably is between 10 and 40%. Soluble protein content is preferably determined by determining the nitrogen solubility index (NSI), for example with the Dumas combustion method by using a Nitrogen Analyzer (Flash EA 1112 Series, Thermo Scientific, Netherlands).

NSI may be determined, for example, after hydration of a sample and subsequent drying in an oven at 105 °C, by determining the nitrogen content of the original ($N_{original}$) and of the dried sample ($N_{dry\ pellet}$), and the mass of the original ($M_{original}$) and of the dried sample ($M_{dry\ pellet}$):

$$NSI = \frac{N_{original} * M_{original} - N_{dry\ pellet} * M_{dry\ pellet}}{N_{original} * M_{original}} \ [\%]$$

The water holding capacity (WHC) of an oilseed protein concentrate such as a rapeseed protein concentrate is preferably at least 2 gram water per gram of dry mass extracted seed protein concentrate, more preferably at least 3-10 gram water per gram of dry mass extracted seed protein concentrate, such as about 4.5 g /g dry pellet.

*5.4 Texturizing the protein concentrate from oilseed*

Forced assembly of a protein concentrate from an oilseed extracted with hydro-alcohol, herein termed texturizing, can be performed by several techniques including extrusion, spinning, shear cell, 3D printing techniques and spinning.

Extrusion has been used for texturizing proteins from various sources, such as soy flours, wheat, and dairy proteins. Plasticization, melting and break-up of proteins occur in an extruder barrel and fibrous textures can be formed due to alignment of the proteins in long cooling dies forming an anisotropic protein network (Aguilera and Stanley, 1993. Food Rev Int 9: 527-550; Cheftel et al, 1992. Food Rev Int 8: 235-275). The ratio of longitudinal versus transversal resistance to stretching is indicative of fiber quality (Thiebaud et al., 1996. Food Science Technol 29: 526-535). Typical ratio values of the longitudinal and transversal resistance to stretching are, for instance, 1-5 for fibrous extrudates from defatted soy flour, depending on barrel temperature and pH (Cheftel et al., 1992. ibid), and 1-2 for extrudates of defatted soy flour and pork as determined by cutting (Liu et al., 2005. Food Sci Techn Int 11: 463-470).

Extrusion may be performed at low, intermediate and high moisture content. Moisture is an important factor and affects the mix viscosity through acting as a plasticizer in the extrudate. As is known to a person skilled in the art, increasing moisture will decrease viscosity, torque, and increase bulk density. This will reduce the pressure at the die. Most extrusion processes for food processing maintain a moisture level below 40%, that is low to intermediate moisture. High-moisture extrusion, also known as wet extrusion, often employs twin screw extruders (TSE), which have a more efficient conveying capability.

A wide range of product characteristics can be achieved by altering process conditions during extrusion processing. Process conditions in the screw section can be varied through independent process parameters, such as barrel temperature, screw speed, and configuration, whereas process conditions in the die section can be varied through cooling rate and die geometry. This improves the flexibility of the process to a significant extent. Extrusion is a multivariate complex process, and the sections are directly linked to each other. Any change in one section (e.g., cooling rate in the die section) results in a change in process conditions in the other section (e.g., pressure and filling degree in screw section).

Appropriate pretreatment may allow for the use of a larger spectrum of proteins and other ingredients such as starches, fibers, and additives. By employing an additional processing step, the extruded mass can be subjected to further treatment using forming units (additional plasticizing devices), where it is chilled, unified, textured, boiled, cooked, marinated and/or molded into strips, patties, or other forms. High-moisture texturized proteins are usually processed and packaged in wet condition (pouches, cans, or frozen).

Shear-induced texturization of a protein concentrate from oilseed that is extracted with hydro-alcohol can also be achieved by subjecting said protein concentrate to a simple linear shear profile, which can for instance be established between a plate and a cone; between a cone and a cone; or in a couette, cone and plate reactor. The sample material is placed in the shearing zone space between two parts (cones, plates or cylinders). In case of a couette device, both the inner and outer cylinders can be heated and/or cooled. Heating may be performed with, for example, water, steam or oil. As an alternative, or in addition, the shear device is placed in an incubator that is set at a temperature of 130

160 °C. Cooling may be performed, for example, with air and/or water. The space between the two cylinders has a width of 5-100 mm between the two cylinders, preferably 10-50 mm, such as 25-30 mm, and has a volume of 2-50 liters, preferably 5-25 liters, such as 7 liters, 8 liters, 9 liters, or 10 liters, a 30 mm distance between the two cylinders. Wageningen University, together with TU-Delft, developed a large scale Couette shear device based on a concentric cylinder rheometer concept. An advantage of this system is the production of larger pieces with fibrous proteinaceous structure by a simple, mild, and cost-effective technology.

Another technique for structurizing a protein concentrate from oilseed that is extracted with hydro-alcohol is based on aligning macromolecules due to shear and elongational flow in a spinneret and during coagulation (Gallant et al., 1984. Food Microstructure 3: 175-183). Typically, resulting fibers (-100 $\mu$m) are coagulated in baths containing acid and salt solutions, and washed afterwards. Hydrocolloids, such as carrageenan (Downey and Burgess, 1979. J Food Techn 14: 21-31; Downey and Burgess, 1979. J Food Techn 14: 33-40) and alginate (Antonov et al, 1985. Die Nahrung 29: 39; Suchkov et al., 1980. Nahrung-Food 24: 893-897), or vegetable proteins, such as soy (Suchkov et al., 1988. Nahrung-Food 32: 669-678) or field bean protein (Suchkov et al., 1988. Nahrung-Food 32: 679-689), were used in combination with casein in a two-phase blend in order to decrease the solubility in water of the casein-based fibers produced.

Yet another technique for structurizing a protein concentrate from oilseed that is extracted with hydro-alcohol is based on three-dimensional (3D) printing, such as powder bed printing (PBP). Such 3D printing processes start with a 3D model, compute cross-sections of that model, and then deposit the cross-sections sequentially on top of each other until the final geometry is achieved. The major challenge in printing food, for example via powder bed printing, is the creation of varying food structures that will result in the perception of various textures. The interactions between food ingredients define what is called the food microstructure.

Three-dimensional printing methods include extrusion-based printing, whereby an extrusion head pushes food materials through a nozzle typically by way of compressed air or squeezing; hot-melt extrusion, in which the food material is heated to above its melting point in the printing head; laser sintering such as selective laser sintering, in which powdered food material is heated and bonded by a laser; binder jetting or powder bed printing, in which powdered layered food material is bonded together by a liquid binder; and inkjet printing, which employs dropping of edible food material onto the surface of the edible food product, without contacting the food product. Inject printing may employ a multi-printhead to print different ingredients at the same time or in succession on a food product.

Yet another technique for structurizing a protein concentrate from oilseed that is extracted with hydro-alcohol is based on a spinning process such as a wetspinning process. US-A-2,682,466 describes edible protein fibers made by dissolving a protein-rich raw material in an alkaline medium, and subsequently extrusion in the form of thin jets into an acidic salt bath in which the fibers coagulate.

Disadvantages of this spinning method are the large water waste streams from the coagulation and washing baths. Further, the necessity of low pH and high salt concentrations, and chemical additives to coagulate the fibers make the design of a process and an apparatus for production of fibers suitable for consumption a complex matter. Further, the combination of fibers obtained through spinning to a fibrous structure is complex, if at all feasible. In NL-C-1019816 products are prepared, which products are aimed to replace meat and fish, and can be baked.

The texturizing step of a protein concentrate from oilseed that is extracted with hydro-alcohol is preferably carried out at a temperature lower than the denaturation temperature of the protein material. As to the simple shear per se the lower limit of the temperature is not critical, as long as the protein solution or dispersion is capable of flowing. Effectively, a modest heating step leads to a quicker alignment.

The process of the invention requires rather concentrated aqueous protein solutions or dispersions, preferably in water. Preferably, the concentration of protein is at least 5 wt.%, preferably at least 10 wt.%, more preferably at least 15 wt.% and even more preferably at least 20 wt.%, drawn on the weight of the entire solution or dispersion. The upper limit of the protein concentration is governed by the requirement that the protein material must be sufficiently mobile to be aligned in the texturizing device. In practice, protein contents will not be higher than about 60 wt.% and preferably not higher than 50 wt.%.

Prior to texturizing the protein concentrate from oilseed that is extracted with hydro-alcohol, said protein concentrate may be mixed with other edible proteinaceous material from any source, including animal, plant, algae, bacterial, fungal origin, or a mixture thereof. The ratio of protein concentrate from oilseed versus in the total proteinaceous material may be from 1 to 100%, such as 5%, 10%, 20%, 25%, 50%, 60%, 70%, 80%, 90%, 95% and 99%. Preferred other edible proteinaceous material may be obtained from gluten, hemp protein, fava bean protein, pea protein, soy protein, or any combination thereof.

In an embodiment, said protein concentrate from oilseed that is extracted with hydro-alcohol may be mixed with animal proteinaceous material, such as milk protein and/or protein that is extracted from meat.

*5.5 Fibrous proteinaceous structure obtained from oilseed protein concentrate*

The invention further provides a fibrous proteinaceous structure generated from hydrous alcohol solvent-extracted oilseed protein concentrate, meaning that said fibrous proteinaceous structure is generated from a protein concentrate that is obtained from a Brassicaceae oilseed press cake extracted with at least two successive hydrous-alcohol solvents having increasing alcohol concentrations, but not extracted with a non-polar solvent such as hexane. Said fibrous proteinaceous structure has a tensile stress between 50 and 600 kPa, preferably between 100 and 550 kPa, preferably between 125 and 500 kPa, and a tensile strain between 0.1 and 1, preferably between 0.2 and 0.7, preferably between 0.26 and 0.51.

Said fibrous proteinaceous structure preferably has a Young's modulus between 600 and 1000 kPa, such as between 700 and 950 kPa, such as between 714 and 921kPa, including 750 kPa, 800 kPa, 850 kPa or 900 kPa.

Said fibrous proteinaceous structure preferably has an anisotropy ratio of greater than 1, preferably greater than 1.25, such as greater than 1.5, greater than 2. Said fibrous proteinaceous structure preferably has a Young's modulus of less than 20, more preferably less than 15.

A preferred fibrous proteinaceous structure generated from hydrous alcohol solvent-extracted oilseed protein concentrate is obtained or obtainable by the process of any one of claims 1-10.

The invention further provides an edible product comprising a fibrous proteinaceous structure generated from a Brassicaceae oilseed press cake, extracted with at least two successive hydrous-alcohol solvents having increasing alcohol concentrations, but not extracted with a non-polar solvent such as hexane.

Said edible product preferably is a foodstuff, a feedstuff, a meat-like product, or an ingredient for food- or feed-stuff.

Characteristics of a food or feed product that is based on a fibrous proteinaceous structure obtained from oilseed protein concentrate are that it inhibits elastic deformation, has appearance and/or behavior comparable with meat and fish, has good ab- and adsorption properties for taste and aroma compounds, and has a proper mouthfeel. A preferred food or feed product is characterized by small whole cut products, such as chicken meat replacers including chicken nuggets, chicken wings, chicken meat balls and chicken sausages such as chicken frankfurters.

A food product primarily exhibits elastic deformation (elastic deformation: G'>G") upon applying a stress, and for which a relatively small stress is needed to obtain a substantial deformation, either due to low elastic modulus or small yield stress.

The appearance and/or behavior comparable with meat and fish relates preferably both in the ability of processing during cooking, including frying and stir-frying, and in consumption. Particularly, the structure of the invention will shorten during heating which gives a behavior that is similar to what happens with meat.

Furthermore, it is desired to provide a fibrous food material having good ab and adsorption properties for taste and aroma compounds, such as herbs and seasoning compounds.

Mouthfeel refers to the physical sensations in the mouth caused by food or feed, distinct from taste. It is a fundamental sensory attribute which, along with taste and smell, determines the overall flavor of a food item. Mouthfeel is also sometimes referred to as texture. Mouthfeel is often related to a product's water activity, whereby a hard or crisp product has low water activity and a soft product often has intermediate to high water activity.

The invention further provides the use of a fibrous proteinaceous structure generated from hydrous alcohol solvent-extracted oilseed protein concentrate in the manufacture of an edible product, preferably in the manufacture of a meat replacer, such as a chicken meat replacer.

EXAMPLES

Example 1

*Materials and Methods*

Two types of sieved rapeseed protein concentrates (RPC) were provided by Avril Group, in which RPC1 was prepared by a routine hexane extraction followed by a hydro-ethanol extraction and RPC2 was prepared by non-hexane (hydro-ethanol) extraction. Vital wheat gluten (WG - Viten®) was purchased from Roquette. NaCl was obtained from Sigma-Aldrich (Zwijndrecht, The Netherlands). Rhodamine B (Sigma R 6626, Sigma Aldrich) and Calcofluor-white (Fluka, 18909, Sigma Aldrich) were used as staining agents for confocal laser microscopy.

RPC1 had a protein content of 66.4 w/w % DM, an oil content of 0.75% w/w % DM. The D(50) was about 139 $\mu$m, the D(90) was about 255 $\mu$m, as determined in a master sizer 300.

The extraction method for RPC2 was as follows.

The starting material was French Rapeseed. The rapeseed was dehulled using an impact huller. The mixture (almond, hulls) obtained was separated using a Denis D50 separator (from the French company DENIS). The following settings were used: Upper screen: wide open; Lower screen: 1 mm round; Front suction: 1; and Rear suction: 0.

After separation of the hulls, the kernels obtained had a purity of 84%. To measure the purity, an internal image analysis method was used. This method consists in placing a sample of dehulled seeds in a scanner and capturing the image. The obtained image is processed with the image processing software Image J. The difference in color or the proportion of yellow surface when compared to reference images corresponds to the kernel purity of the obtained mixture.

The dehulled kernels were crushed to extract the oil by using a double pressing process in semi-continuous mode using a screw press MBU75 (OLEXA, Arras, FR) and for the second stage a small press from the same company: MBU 20. The rapeseed were first preheated at 80-86°C to feed the MBU75 press. For the first pressing step, the temperature within the press was stabilised at 70°C and the rotation speed was stabilised at 23 Hz. The outflow of press cake and oil was around 60-70 kg/h and 39-44 kg/h, respectively. During a second pressing step, for which a smaller press (MBU 20) was used, the rotating frequency was set at 26 Hz and the temperature stabilised around 86°C. In these conditions, the rapeseed cake flow rate was around 54-59 Kg/h and the oil flow rate around 8.5-10 Kg/h. The composition of the final rapeseed press cake (pressed meal) thus obtained is presented in Table 1.

Table 1. Composition of rapeseed press cake.

| Dry matter (wt %) | Fat (%/DM) | Protein content Nx6.25 (%/DM) | Solubility (%) | Glucosinolate ($\mu$mol/g of dry solid) |
|---|---|---|---|---|
| 92.50 | 11.47 | 38.42 | 57.9 | 35.9 |
| DM: Dry mass. | | | | |

Four (4) different washing steps, each using a solvent having a different alcohol content, were successively carried out on the rapeseed press cake in order to extract, or purify, the proteins. These solvents were a mixture of water and ethanol having the following ethanol proportions 65%, 70%, 80% and 96% by weight. These solvents/washing steps and the key parameters for each step are presented in Table 2. 91 Kg of the Rapeseed press cake were used for extraction.

Table 2. Hydro-ethanol washing steps.

| Parameters | Extraction1 | Extraction2 | Extraction3 | Extraction4 |
|---|---|---|---|---|
| Ethanol content in solvent in wt % | 65% | 70% | 80% | 96% |
| Solvent: rapeseed press cake ratio (weight) | 8.2:1 | 8.1:1 | 8.1:1 | 7.5:1 |
| Mass of solvent (Kg) | 748 | 733 | 735 | 681 |
| Extraction temperature (°C) | 65°C | 65°C | 65°C | 65°C |
| Extraction time (minutes) | 72 min. | 60min. | 60min. | 60min. |

The washing steps, which are separately described herein below, were used to remove the oil from the cake, as well as small soluble components such as polyphenols, sugars, salts etc. The washing, or extracting steps were carried out in an agitated filter tank (Guedu - capacity 400 liters - supplier De Dietrich SAS, Niederbronn Cedex, FR). This device is equipped with a vertically mobile stirrer, a jacket for hot steam, or water, circulation in order to heat the mix and a cotton cloth having a 10$\mu$m mesh allowing for liquid - solid separation. During each washing step, or extraction step, the pressed meal was immersed in the solvent at a specific temperature, according to a determined time, and under an agitation of 21-24 rpm.

Step 1: Ethanol 65%. The first solvent used was 65% ethanol in water. The temperature set was ranging from 55-65°C. The rapeseed press cake:liquid solvent ratio was 1:8 (w/w) and the total processing time included solvent heating was about 72 minutes. A solid/liquid separation step was then carried out by filtration (percolation).

Step 2: Ethanol 70%. The solid from the extraction step 1 obtained was then mixed with a 70% ethanol solution according to a rapeseed press cake:liquid solvent ratio of 1:8. The temperature of this washing step was 65°C. The total processing time included solvent heating was about 90 minutes. A solid/liquid separation step was then carried out by filtration (percolation).

Step 3: Ethanol 80%. The solid from extraction step 2 was mixed with an 80% ethanol solution according to a solid:liquid weight ratio of 1:8. The extraction temperature was around 65°C and the extraction time, including solvent heating, was 90 minutes. A solid/liquid separation step was then carried out by filtration (percolation).

Step 4: Ethanol 96%. The solid from extraction step 3 obtained was mixed with a 96% ethanol solution according to a solid:liquid weight ratio of 1:7.5. The extraction temperature was around 65°C and the extraction time, including solvent heating, was 90 minutes. A solid/liquid separation step was then carried out by filtration (percolation).

The solid fraction obtained by filtration (percolation) from step 4 was desolventised (i.e. the solvent was removed) in the filter tank used to carry out the extraction steps (Guedu; capacity 400 litres - De Dietrich Process Systems). Upon agitation, a vacuum was applied (0.8 bar) at 53°C for more than 10 hours. A final rapeseed concentrate was thus obtained. The dry matter percentage of the obtained concentrate was 88.4%.

The mass balance of each extraction step is shown in Table 3 below:

Table 3. Mass balance of extraction step

| Flux | Extraction step | 1 | 2 | 3 | 4 |
|---|---|---|---|---|---|
| in | Press cake weight | 91Kg | / | / | / |
| | Solvent weight | 748Kg | 733Kg | 735Kg | 681Kg |
| Out | Miscella weight | 660Kg | 660Kg | 742Kg | 683Kg |
| | Miscella dry matter | 1.94% | 0.5% | 0.31% | 0.57% |

The obtained protein concentrate was deagglomerated and then sieved using a 180 microns sieve in order to obtained RPC2. RPC2 had a protein content (%DM - NF EN ISO 16634, 2008) of 55.5% and an oil content Lipids (%DM - CEE98/64 (light petroleum) 1998) of 3.2%.

Protein mixtures of RPC and WG were prepared at different ratios (100:0, 80:20, 65:35, 50:50, 35:65, 20:80 and 0: 100). All formulas comprised 40 wt % protein mixture, 1 wt % sodium chloride, and 59 wt % demineralized water with a total weight of 90 g. RPC-WG mixture with a ratio of 50:50 was also prepared at different end concentrations (30 wt % - 40 wt %), with 1 wt % sodium chloride and the rest are demineralized water. Firstly, the sodium chloride was mixed with demineralized water in a plastic beaker using a flat spoon. After 30 min hydration, the WG was added and mixed thoroughly with the flat spoon and immediately transferred for further processing.

A high-temperature conical shear cell (HTSC) (Wageningen University, the Netherlands) was used for the structuring experiments. The HTSC was designed in house and reported in previous studies (Dekkers et al., 2018. Food Res Int 107: 281-288; Grabowska et al., 2016. J Food Engin 188: 77-86; Schreuders et al., 2019. J Food Engin 261: 32-39). HTSC is a cone-cone device and the bottom cone can be rotated to produce a steady shear flow, which allows fast heating and cooling using an oil bath during shearing without water evaporation. The protein mixtures were transferred in the preheated HTSC at a certain temperature and sheared constant for 15 minutes and 30 rpm. Different temperatures were tested in this study from 85°C to 150°C dependent on the structural properties. Afterwards, the shear cell was cooled down to 25 °C in 15 minutes, and the sample with a round pan cake like shape was taken out. A plastic bag was used to store the sample to prevent moisture evaporation for one hour before further analysis.

Apart from the shearing experiments, two additional test were performed to understand the effect of shearing and heating in the structure formation. The RPC-WG mixture (100:0 and 50:50) was heated without shearing in the HTSC at 120 °C and 140 °C for 15 min and 30 rpm. The other experiments with the same RPC-WG mixture was sheared without heating in the HTSC for 15 min and 30 rpm.

A confocal laser scanning microscope (CLSM) type 510 (Zeiss, Oberkochen, Germany) was used to visualize the structured samples on a microscopic scale. RPC-WG mixtures were frozen before cutting in a rectangular shape sample with dimension of approximately 3 by 5 by 10 mm along the shear flow direction. The sample was frozen immediately by the liquid nitrogen. A cryomicrotome (Micron CR50-H, ADAMAS-instruments, Rhenen, The Netherlands) was applied to slice the samples into 40 μm thick specimen at -20 °C. Afterwards, the specimens were stained with a mixed solution of Rhodamine B 0.002 wt. % and Calcoflour White 0.01 wt. % at 1:1 ratio, which was covered with a glass and stored in dark for one hour before analysis.

Excitation light in CLSM was provided by two lasers: a HeNe laser at 543nm for Rhodamine B, and a Blue/Violet diose laser at 405 nm for Calcoflour White. A 10x EC Plan-Neofluar/0.5 objective lens was used to take the images. The blue edition of the ZEN software (Carl Zeiss Microscopy, The Netherlands) was used to analyse the images.

The air inclusion of the shear cell samples were analysed with the imaging technique of 3D non-invasively and non-destructively by using an X-ray microtomographer, GE Phoenix v | tome | x m (General Electric, Wunstorf, Germany). A 240 kV microfocus tube with tungsten target was employed and a voltage of 80 kV and current of 90 $\mu$A X-rays were produced. The images were recorded by a detector (GE DXR detector array with 2024 $\times$ 2024 pixels and pixel size 200 $\mu$m) located 815 mm from the X-ray source. Fragments 4 $\times$ 5 $\times$ 20 mm were cut from the sheared samples considering that, i) fragments were parallel to the shear direction and, ii) fragments were taken in duplicate from two random positions, one closer to the edge and the other one closer to the centre. The fragments at room temperature were placed into an Eppendorf tube to avoid moisture loss and was placed 28.55 mm from the X-ray source, resulting in a special resolution of 7.00 $\mu$m.

Scans consisted of 1500 projections by spinning the sample over 360 ° with a step of 0.24 °. The projections obtained were reconstructed into a single 3D structure using GE reconstruction software (Wunstorf, Germany), with the first projection skipped. Reconstructed images of the samples were analysed using Avizo imaging software version 9.2.2. Two reconstructed images was used to calculate the porosity of the samples.

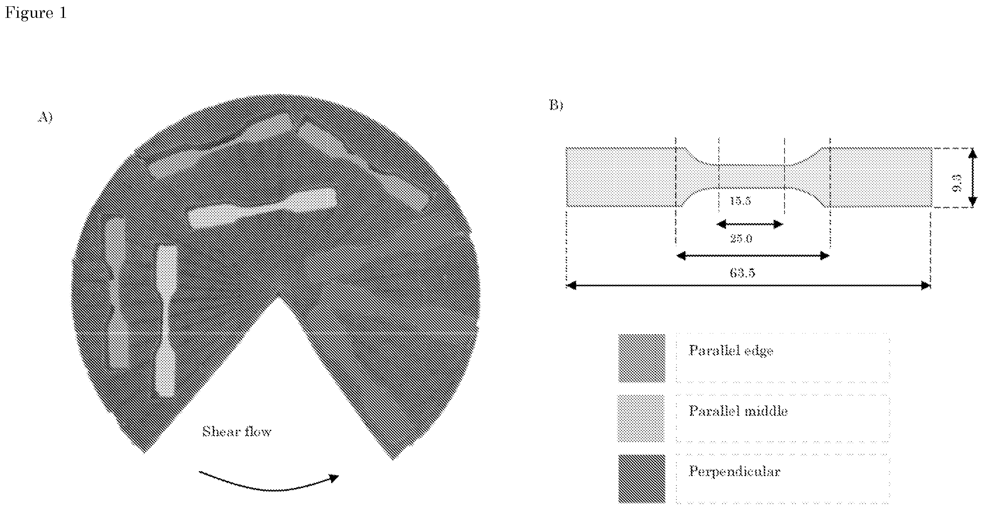

The mechanical properties of sheared samples were measured using a texture analyser (Stable Micro System, UK). Tensile stress, tensile strain and Young's Modulus were analysed by uniaxial tensile tests, which were performed at room temperature with a constant deformation speed of 1 mm/s. Tensile bars were cut using a dog bone shaped cutter at parallel and perpendicular direction. Parallel to the shearing direction, three tensile bars at the edge of sample and two tensile bars at the middle of the sample were taken due to the varied thickness of the sample (see Figure 1). Besides, three tensile bars perpendicular to the shearing direction were cut. Afterwards, the width and thickness of the tensile bars were measured

using a digital calliper (Mitutoyo, Japan) to calculate the initial cross-sectional area. The gage length (rectangular central area of constant width) of 15.5 mm (L0) was used for as the initial length of each specimen. The ends of tensile bars were fixed into the tensile grips for the uniaxial tensile tests. The force needed to break the sample $F(t)$ was recorded by the software Exponent (Stable Micro System, UK). The engineering strain (e) [-], true strain ($\varepsilon$) [-] and true stress ($\sigma$) [kPa] were calculated based on the assumption that the volume of the tensile bar did not change during elongation (Choung and Cho, 2008. J Mechanical Science Technol 22: 1039-1051; Raheem, 2014. ASTM Intern 82: 1-15).

$$\text{True strain } \varepsilon_t \text{ (-) } \varepsilon_t = ln\left(\frac{L}{L_0}\right)$$

with $L_0$ initial length of the specimen (cm), $L$ length of the specimen at break (cm).

The term "tensile strain", as is used herein, refers to the deformation or elongation of a solid body due to the application of a tensile stress. Tensile strain can be expressed mathematically by the formula

$$\text{True stress } \sigma_t \text{ (Pa) } \sigma_t = \frac{F}{A_0}\frac{L}{L_0}$$

The uniform true strain is related to the engineering strain until onset of necking, where $A_0$ is the initial cross-sectional area. F(t) is the force at the fracture time t. Young's modulus was calculated from the slope of the tensile stress-strain curve between 5 to 1.5 mm. Duplicates of samples were made in the shear cell and in total at least 8 effective parallel samples and 5 effective perpendicular samples were measured. The values were averaged and the standard deviation was determined. The obtained parameters showed a relative large standard deviation that was partly related to structures obtained and the expected overall inhomogeneity characteristics of the fibrous structure. True strain and stress based anisotropic index was calculated as the parallel value divided by the perpendicular value to characterize the formation of fibrous structure. For the tensile test calculations, only tensile bars that were broken inside the gage length area were considered in this report.

Particle hydration was performed by making a 2 w/v % dispersions in a 100 mL beaker with Milli-Q water and continuously stirred at 300 rpm with a magnet. The dispersions were stirred for 24 h, and the samples were taken at time intervals of 0, 1 and 24 h. Particle size distribution was measured using a Mastersizer-3000 device (Malvern Instrument Ltd., UK).

The nativity of the rapeseed materials were analyzed using Differential Scanning Calorimetry (DSC) (TA instrument 250, USA). A sample slurry 20% (w/v) with 40mg was prepared in a high volume pan of 60 $\mu$L, which was hermetically sealed and heated from 25°C to 140°C with a heating rate of 5°C/min in DSC. The peak temperature and the integrated enthalpy values of the endothermic peaks were collected by the Trios data analysis software.

Rheological properties with 40% DM of rapeseed materials were measured with a Closed Cavity Rheometer device (CCR) (RPA elite, TA instruments, USA) by Closed Cavity Rheometer device (CCR) (RPA elite, TA instruments, USA), prepared with the total mass of 5 g followed by 30 min hydration. Small deformation was performed by anisothermal temperature sweep with 1% strain and 1Hz frequency was applied from 40-150°C to understand the effect of heating on the rheological properties. Apparent modulus G* was used to describe the complex modulus due to the measurements above 120°C were out of linear viscoelastic region. The isothermal time sweep was further applied to measure the rheological properties by heating at a specific temperature for a certain time of both materials at 120°C and 140°C for 15 min at 1% strain and 1Hz frequency.

*Results*

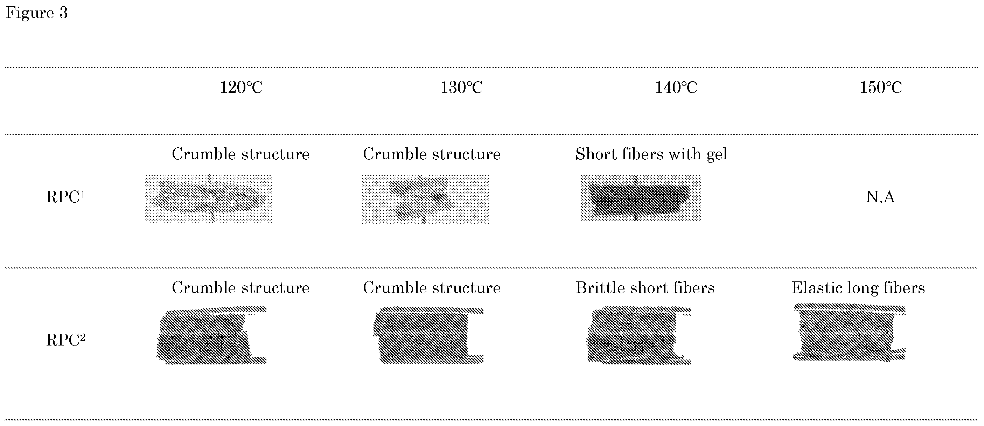

RPC1 was obtained from hexane extraction followed by aqueous-alcoholic extraction, which was sheared at 120°C, 130°C and 140°C. The sheared samples were compared with the non-hexane (hydro-alcoholic) extracted RPC2 which was processed at 120°C, 130°C, 140°C and 150°C in the shear cell at the same condition. The structure of both samples were visualized in Figure 3, which was taken by bending the samples manually.

The sheared sample RPC1 showed no fibrous structure from 120°C till 140°C, while the shearing experiment above 140°C was not performed due to a limitation of the materials. The fibrous structure was formed for RPC2 at 140°C, which was more elastic and longer when sheared at 150°C. Whereas crumbled gel was found below 130°C, and no solidification can be found below 120°C. This shows that RPC2, i.e. a protein concentrate that has not been extracted with hexane, has improved properties when compared to RPC1, that has been extracted with hexane.

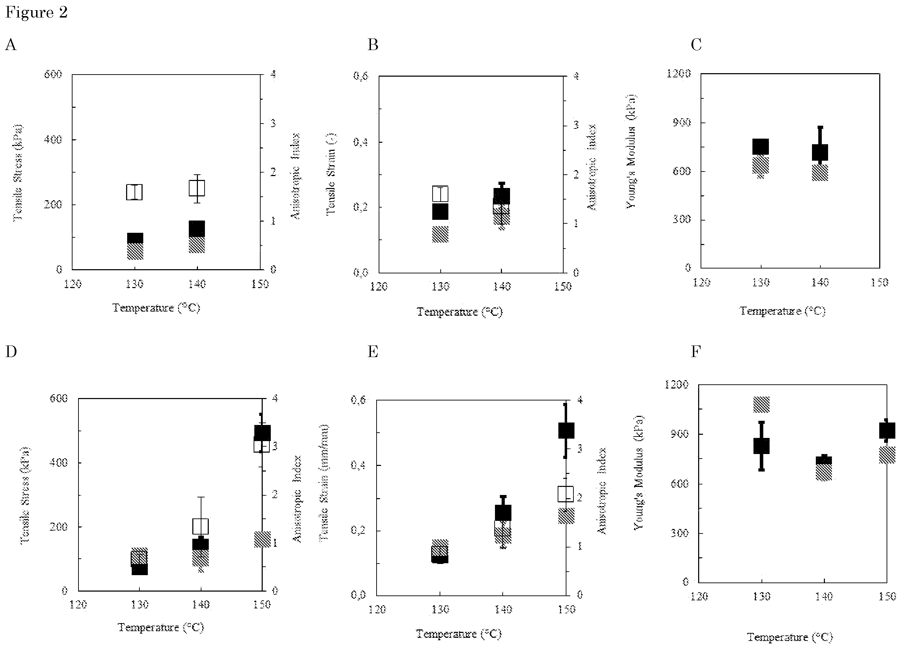

The mechanical properties of the sheared samples were measured by the tensile tests and the results are showed in Figure 2. The tensile stress and strain of RPC1 were found to be increased slightly at higher temperature. The difference in both parallel and perpendicular directions of tensile stress and strain was 1.3- 1.6 times, shown as AI value, though crumble structure was found in Figure 3, which might suggest the formation of not visible anisotropic structure.

The effect of temperature was bigger with the tensile strain of RPC2. Remarkably, the tensile stress at parallel direction of RPC2 was found to be three times higher than the perpendicular direction at 150°C. The AI of tensile strain (2.1) was also found to be high at 150°C and these high AI value confirmed the fibrous structure observed in Figure 3. The Young's modulus was stable at different temperatures.

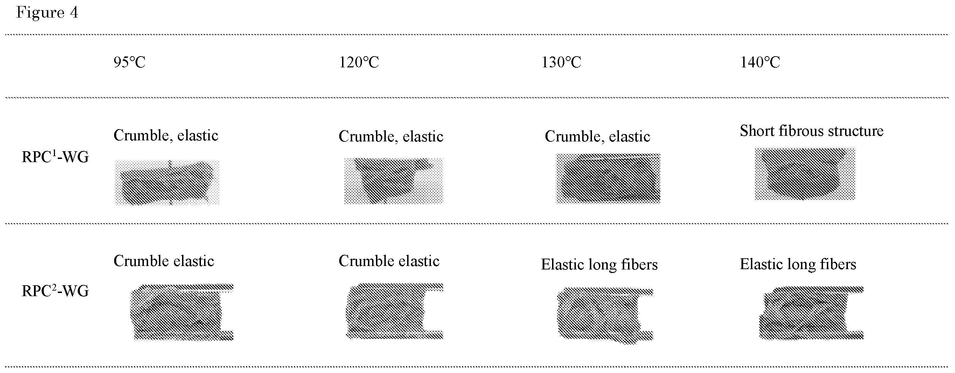

The macro structure of the RPC1-WG and RPC2-WG mixtures at 1:1 ratios are visualized in Figure 4. The RPC and WG mixtures was elastic and sticky structure in general at all temperatures tested. The fibrous structure was observed at 140°C for RPC1 -WG, whereas for RPC2-WG fibrous structure was formed at 130°C, again showing the improved properties of RPC2, when compared to RPC1.

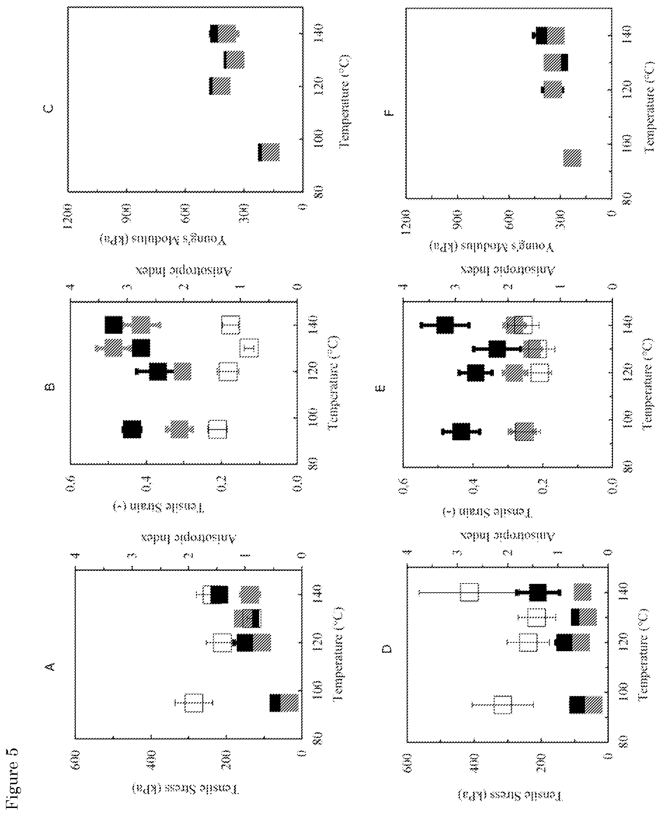

The mechanical tensile properties of tensile stress, tensile strain and Young's modulus are shown in Figure 5. For both RPC mixtures, the tensile stress were found to be lower than 200 kPa and increased by increasing of temperature, except slight decreasing at 130°C. A trend of decreasing with AI was found from 95°C to 130°C, which was increased at 140°C. High AI value of RPC2 -WG at 140°C was in line with the pronounced fibrous structure shown in Figure 4. The high deviation of AI with RPC2-WG mixture at 140°C indicates high inhomogeneity of the fibrous structure. The tensile strain for both mixtures fluctuated (in a range of 0.3-0.5 and 0.2-0.5 respectively) from 95°C to 140°C. The AI was hardly affected by temperature. The Young's modulus was found to be lower compared to the RPC sample in Figure 5 which might indicates low stiffness of the structure. Based on the results described above, the fibrous structure for the RPC2 and RPC2 -WG samples were found to be more pronounced compared to the RPC1 and RPC1 -WG samples. Further, the shearing temperature of 140°C was concluded as the crucial temperature for the fiber formation. Therefore, the rapeseed concentrates of RPC2 and 140°C will be applied for the further investigation of the fibrous structure formation with respect to the effect of RPC and WG ratio and the dry matter content.

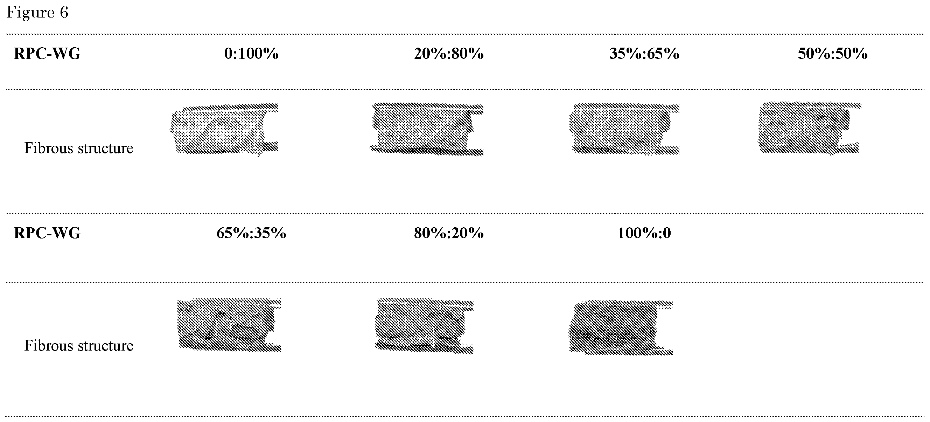

Different ratios of RPC2 and WG (0%, 20%, 35%, 50%, 65%, 80% and 100%) were analysed towards fibrous structure properties at 140°C, 30 rpm and 15min with 40 wt % in the shear cell (Figure 6). Fibrous structures was found at whole range of RPC:WG ratio, in which the structure of fiber and layered gel was found to be coexisted with the ratios between 50% to 100%. Besides, the ratio of 65% and 80% showed less fibrous, and more crumble gel like structure. The mixtures at higher WG ratios showed light grey color, which was showed as yellow brown with increasing of RPC ratio.

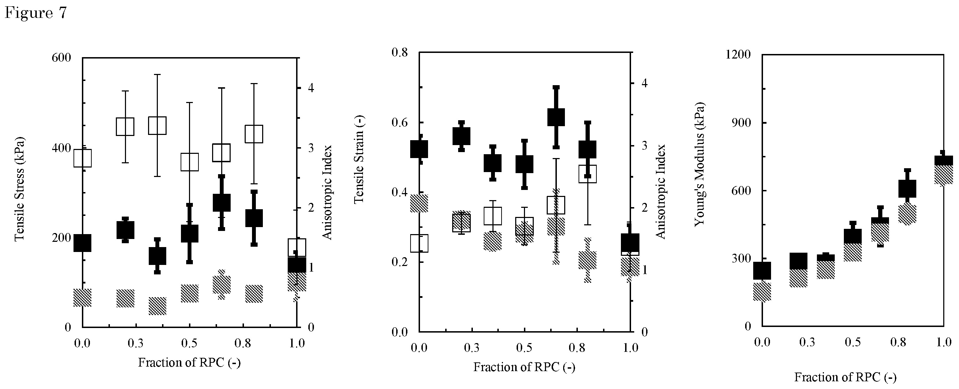

The tensile stress of the RPC-WG mixtures were found to be in between 100 and 300 kPa for the parallel direction and in between of 50 and 100 kPa for the perpendicular direction (Figure 7). The difference between the two directions were found to be approximately 3 times except the 100% RPC with the AI of 1.3, which confirmed fibrous structure in Figure 6. The large standard deviation of the AI indicates the inhomogeneity of the fibrous structure. Tensile strain value at the parallel direction was hardly affected by the RPC ratios with a fluctuation between 0.5 and 0.6, except the 100% RPC with a much lower value of 0.26. Unlike the behavior of parallel tensile strain, the tensile at perpendicular direction strain showed a decreasing trend with increasing of RPC ratio. This results lead to an slight increase of AI with tensile strain. Opposite to the remarkably lowest AI of 100% RPC with both tensile stress and strain, highest Young's modulus was found for this sample. Further, the Young's modulus was found to be increased with increasing of RPC ratio. This results suggested the fibrous structure characteristic of brittle, stiffness and less deformable with RPC material.

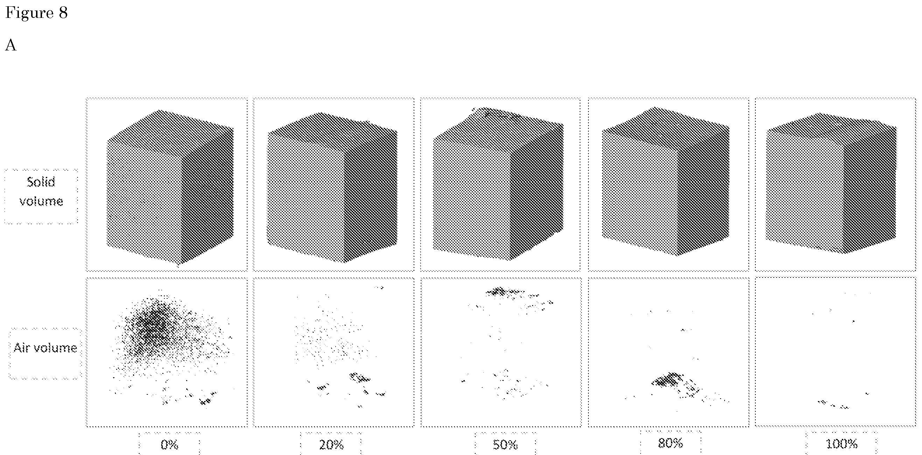

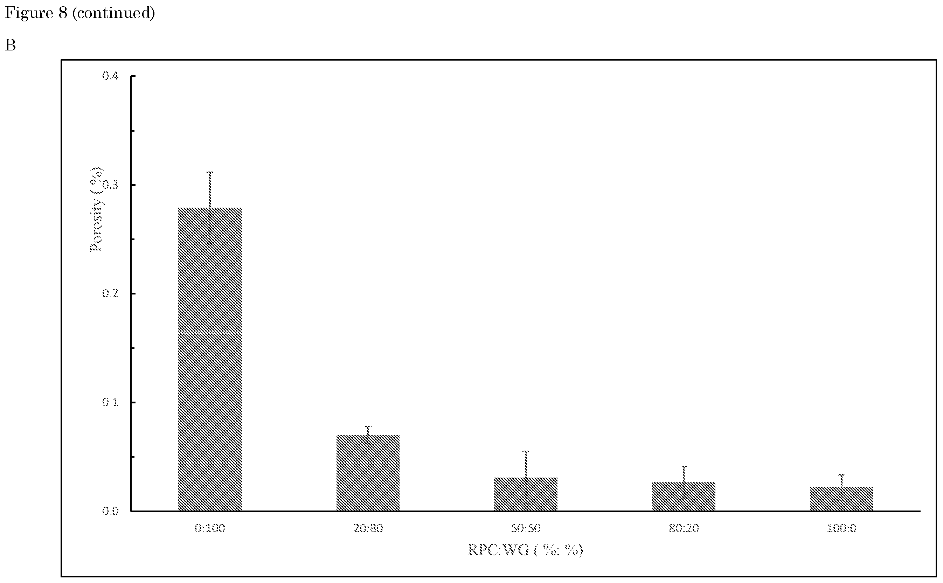

The air incorporation analysed by X-ray microtomography (XRT) is an important structural characteristic which can help with the studying of the differences in fibrous structure. With an exception for the first sample of 0% RPC, which showed small holes on the surface of the solid form with air volume of approximately 0.3%, hardly any air was found with the other samples. Figure 8 showed that 20% RPC had remarkably lower air volume of 0.07%, which was further decreased to 0.03% and stable results were found for the 50%, 80% and 100% RPC.

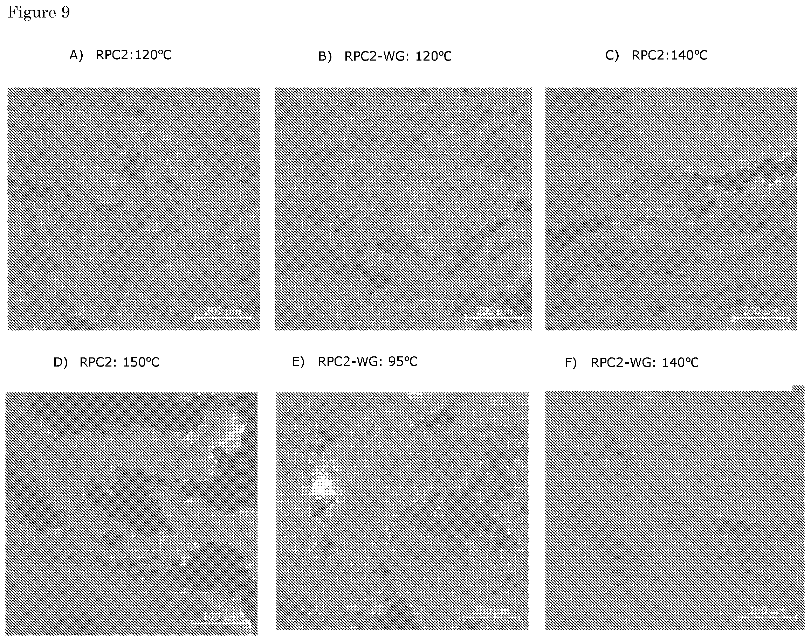

CLSM was used to examine the microstructure and the distributions of protein and carbohydrates with the RPC and RPC-WG mixture are visualized in Figure 9. For RPC, it was found that rapeseed proteins are distributed as cluster of particles at 120°C, and the carbohydrates were observed at the outside of each particle. The particles were in the original shape of the cellular matrices observed in the literature (Laguna et al., 2018. Industrial Crops Products 118: 160-172). When temperature increased to 140°C, the particles start to form a continuous network, where the carbohydrates with blue color distributed in between the protein continuous network, which act as a second phase. The continuous network was found to be separated along the fibrous direction due to the cutting of brittle fibrous structure at 150°C. Similar RPC protein particles were observed with RPC-WG mixtures at 95°C, while the particles seems to be swelled into a much larger volume when heated up to 120°C. The gluten protein can be separated from RPC particle as a cohesive continuous network that connect the RPC protein particles. Similar WG protein network was found with the pure WG sheared sample at 140°C in the supplementary material with different RPC-WG ratios. At 140°C, RPC protein disappeared, which were connected with WG protein with each other into a continuous network, with the carbohydrates from RPC separated in the network as a dispersed phase.

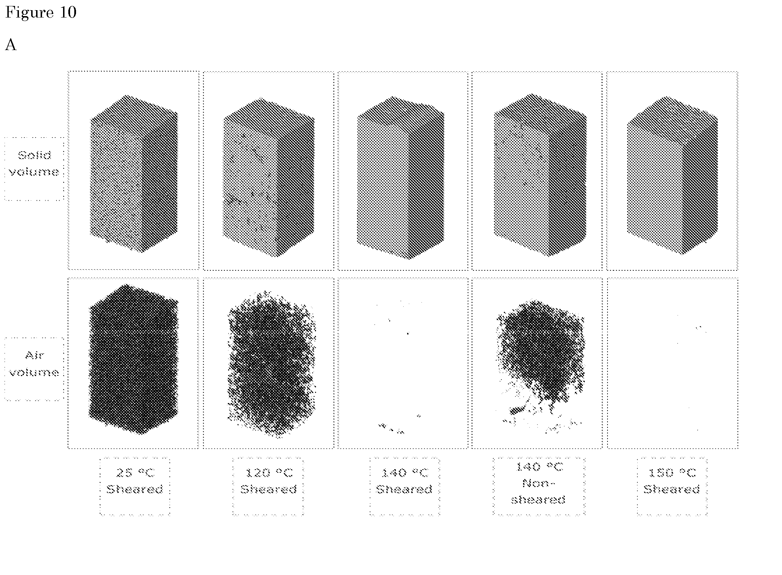

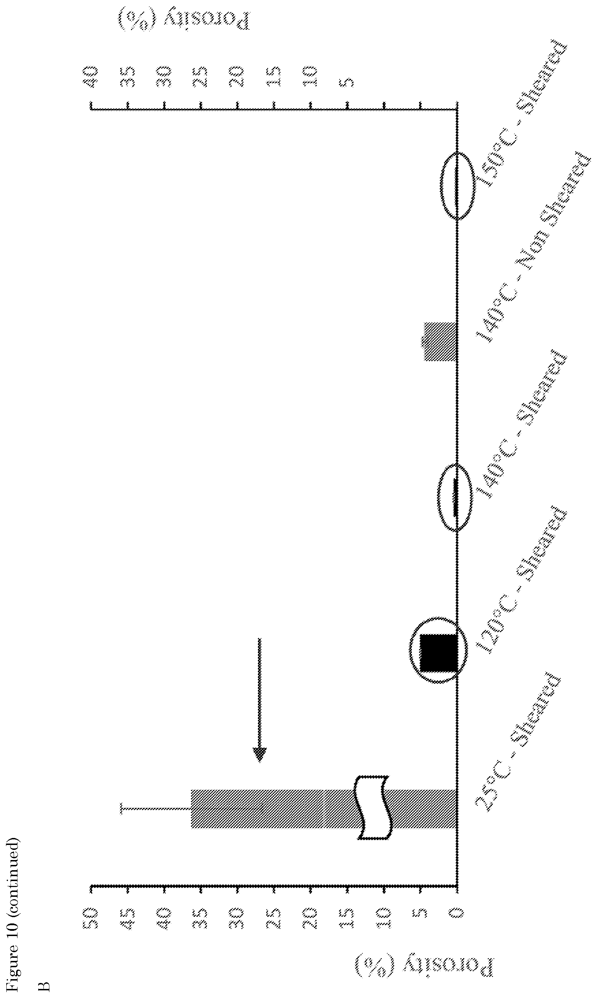

When samples were only heated without shearing at 120°C, no clear difference can be found with the crumble structure. Whereas when the shearing temperature increased to 140°C, the effect of shearing becomes visible in that the fibrous structure were formed at 140°C, and crumbled structures were found without shearing (see Figure 10A). This observation was further confirmed by the CLSM pictures, that when no shearing was applied, the RPC protein particles stay separated apart from each other, though the protein particles became more hydrated and swelled at 140°C compared to 25°C. Shearing at high temperature also lead to the reducing of the air incorporation at 140°C (Figure 10B).

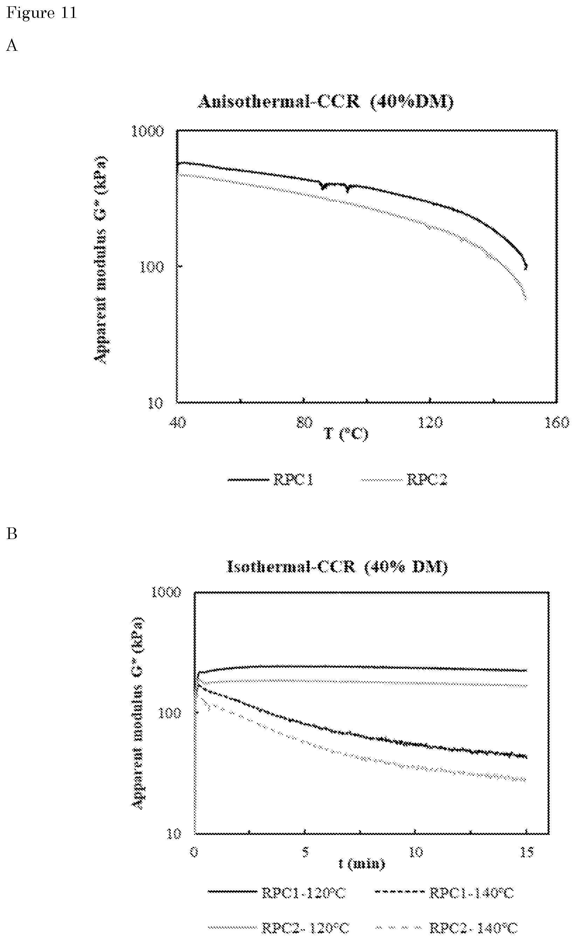

The anisothermal experiment results (see Figure 11A) revealed a decrease in complex modulus G* with hexane extracted RPC1 from 583 kPa at 40°C to 290kPa at 120°C, followed by a large decrease to 120 kPa at 140°C and 70kPa till 150°C. Similar trend was found with the non-hexane extracted RPC2, slightly lower apparent modulus G* was found in a range of 410-200 kPa from 40°C to 120°C which was further decreased to 110 kPa and 57 kPa at 150°C. The G* of both materials was similar to each other at high temperature above 140°C.

The isothermal time sweep experiment (see Figure 11B) revealed that the G* increased quickly stabilized between 245-225 kPa after 5 min at 120°C. A decrease was found at 140°C from the initial value of 141 kPa to 45 kPa at 15 min. Both materials behaved similarly with a slightly lower G* for the non-hexane extracted RPC1 ranging from 146-169 kPa and 192-168 kPa at 120°C and 140°C respectively.

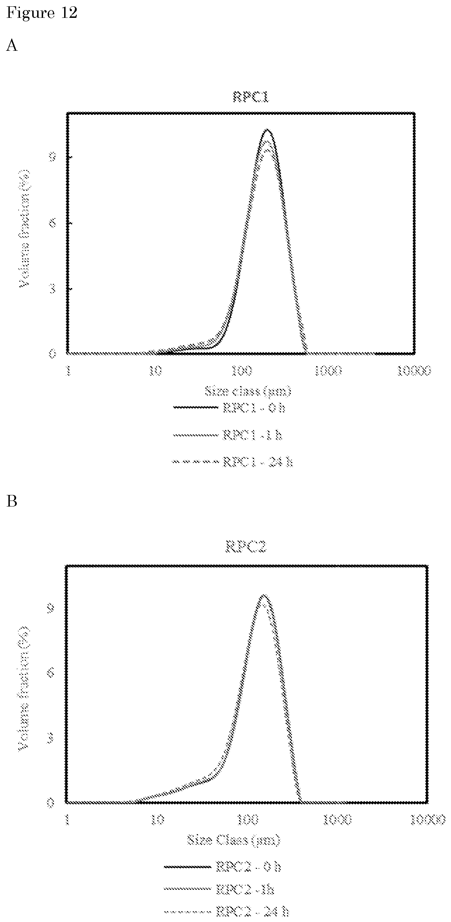

Both RPC1 and RPC2 samples, extracted with and without hexane, were hydrated in a 2 w/v % dispersion, and the particle size was measured by a Master sizer 3000. Both materials showed very stable particles during hydration, with no clear change in the particle size distribution (Figure 12 A,B). The main particle size below 500μm and 350μm for the RPC1 and RPC2, respectively, which indicates slightly more fine particles with the RPC2. It probably indicates a slightly different drying or milling process rather than differences between the RPC's.

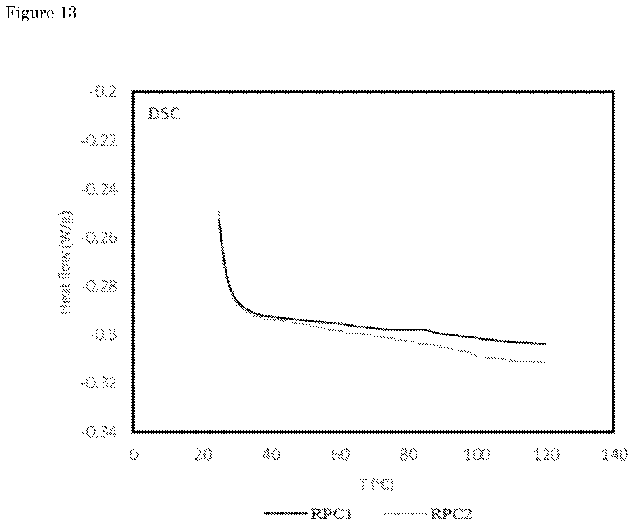

The protein of the RPC obtained with and without hexane extraction were completely denatured with no denaturation peak detected (see Figure 13).

Example 2

*Material and methods*

The rapeseed protein concentrate (RPC) used for the extrusion trials was provided by Avril in March 2021 (batch C5701-BFA). The provided dry matter content of the RPC was 92.2 g/100 g and the protein content (N×6.25) 58.2 g/100 g based on wet weight.

The extrusion trials were performed on a Brabender Twinlab-F (C. W. Brabender Instruments, Inc., South Hackensack, New Jersey (USA)), which is a laboratory-scale stand-alone co-rotating twin screw extruder (Ø 20 mm) in hygienic design for processing small amounts of raw materials and additives. A cooling die of 30 cm was attached to the extruder. Processing conditions were chosen based on experience with other raw materials that result in anisotropic structures relevant for meat analogues. The process design is detailed in Table 4.

Table 4. Process settings for extrusion with RPC.

|  | Experiment 1 | Experiment 2 |
|---|---|---|
| Temperature profile barrel (section 1-2-3-4) [°C] | 40-80-120-140 | 40-80-120-140 |
| Screw speed [rpm] | 800 | 300 |

(continued)

|  | Experiment 1 | Experiment 2 |
| --- | --- | --- |
| Throughput [kg/h] | 4.5 | 7 |
| Moisture content [g/100 g] | 53 | 50 |
| Temperature of the cooling die [°C] | 50 | 80 |

The extrudates were analyzed by means of a visual evaluation.

*Results*

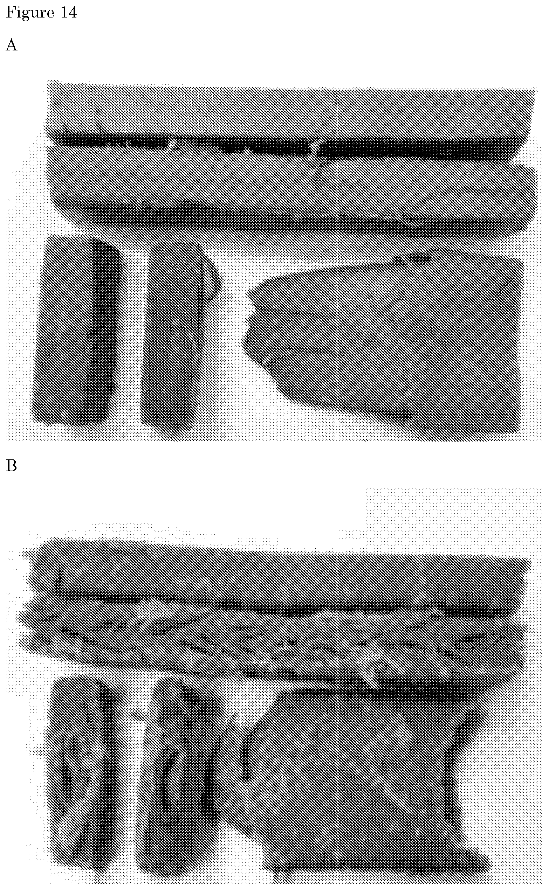

The process conditions tested resulted in two different structures (Figure 14): experiment 1 shows a lamella structure and long wedge length (Figure 14A), and experiment 2 shows a more porous lamella structure (Figure 14B). These experiments show the structuring potential of the RPC tested. Products with a long wedge are often used as building blocks in a comminuted product like a hamburger. The fibrous product may be used as small whole cut products such as, for example, chicken meat replacer.

**Claims**

1. Process for the preparation of fibrous proteinaceous structures from a Brassicaceae oilseed press cake, preferably a rapeseed press cake, comprising the steps of

   - providing a protein concentrate from said oilseed press cake extracted with at least two successive hydrous-alcohol solvents having increasing alcohol concentrations, but not extracted with a non-polar solvent such as hexane, wherein said press cake has a protein content of less than 70% dry w/w,
   and
   - texturizing the protein concentrate at a temperature between 130 °C and 160 °C.

2. The process according to claim 1, wherein the seed protein concentrate is obtained from oilseed that is dehulled, prior to and/or following extraction with hydroethanol.

3. The process according to claim 1 or claim 2, wherein the seed is pressed prior to extraction of the press cake with hydro-alcohol.

4. The process according to any one of claims 1-3, wherein the extracted oilseed protein concentrate has a nitrogen solubility index below 40%.

5. The process according to any one of claims 1-4, wherein the extracted oilseed protein concentrated is mixed with an aqueous solution, preferably water, prior to texturizing said concentrate.

6. The process according to any one of claims 1-5, wherein the extracted oilseed protein concentrate is mixed with other edible material such as proteinaceous material and/or carbohydrates, prior to texturizing said concentrate, preferably with gluten, hemp protein, fava bean protein, pea protein, soy protein, and/or pectins.

7. The process according to any one of claims 1-6, wherein the extracted protein concentrate has a protein content based on the dry mass is in the range of 40% to less than 70%, preferably between 50% and 60%.

8. The process according to any one of claims 1-7, wherein the extracted oilseed protein concentrate has a cell wall polysaccharide content based on the dry mass in a range of 5% to 70%.

9. The process according to any one of claims 1-8, wherein the step of texturizing is performed by extrusion and/or by shear cell technology.

10. The process according to any one of claims 1-9, wherein the extracted oilseed protein concentrate has a water hydration capacity of at least 2 gram water per gram of dry mass extracted oilseed protein concentrate, preferably at least 3 gram water per gram of dry mass extracted oilseed protein concentrate.

11. Fibrous proteinaceous structure that is generated from a protein concentrate that is obtained from a Brassicaceae oilseed press cake extracted with at least two successive hydrous-alcohol solvents having increasing alcohol concentrations, but not extracted with a non-polar solvent such as hexane, having a tensile stress between 50 and 600 kPa and a tensile strain between 0.1 and 1.

12. The fibrous proteinaceous structure generated from extracted oilseed protein concentrate according to claim 11, having a Young's modulus between 600 and 1000 kPa.

13. The fibrous proteinaceous structure generated from extracted oilseed protein concentrate according to claim 11 or 12, which has an anisotropy ratio of greater than 1, preferably greater than 1.5.

14. The fibrous proteinaceous structure according to any one of claims 11-13, obtainable by the process of any one of claims 1-10.

15. An edible product comprising the fibrous proteinaceous structure of any one of claims 11-14.

16. The edible product of claim 15, which is a foodstuff, a feedstuff, a meat-like product, or an ingredient for food- or feed-stuff.

17. Use of the fibrous proteinaceous structure according to any one of claims 11-14 in the manufacture of an edible product, preferably in the manufacture of a meat replacer.

**Patentansprüche**

1. Verfahren zur Herstellung von faserigen proteinhaltigen Strukturen aus einem Brassicaceae -Ölsaatpresskuchen , vorzugsweise einem Rapspresskuchen, umfassend die Schritte von:

   - Bereitstellen eines Proteinkonzentrats aus dem Ölsaatpresskuchen, extrahiert mit mindestens zwei aufeinanderfolgenden wasserhaltigen alkoholischen Lösungsmitteln mit steigenden Alkoholkonzentrationen, aber nicht extrahiert mit einem unpolaren Lösungsmittel wie Hexan, wobei der Presskuchen einen Proteingehalt von weniger als 70 % Trockengewicht/Gewichtsprozent hat, und
   - Texturieren des Proteinkonzentrats bei einer Temperatur zwischen 130 °C und 160 °C.

2. Verfahren nach Anspruch 1, wobei das Samenproteinkonzentrat aus Ölsaat erhalten wird, die vor und/oder nach der Extraktion mit Hydroethanol geschält wird.

3. Verfahren nach Anspruch 1 oder Anspruch 2, wobei der Samen vor der Extraktion des Presskuchens mit Hydroalkohol gepresst wird.

4. Verfahren nach einem der Ansprüche 1 bis 3, wobei das extrahierte Ölsaatproteinkonzentrat einen Stickstofflöslichkeitsindex von unter 40 % hat.

5. Verfahren nach einem der Ansprüche 1 bis 4, wobei das extrahierte Ölsaatproteinkonzentrat vor dem Texturieren des Konzentrats mit einer wässrigen Lösung, vorzugsweise Wasser, gemischt wird.

6. Verfahren nach einem der Ansprüche 1 bis 5, wobei das extrahierte Ölsaatproteinkonzentrat vor der Texturierung des Konzentrats mit anderem essbaren Material wie proteinhaltigem Material und/oder Kohlenhydraten gemischt wird, vorzugsweise mit Gluten, Hanfprotein, Fava-Bohnenprotein, Erbsenprotein, Sojaprotein und/oder Pektinen.

7. Verfahren nach einem der Ansprüche 1 bis 6, wobei das extrahierte Proteinkonzentrat einen Proteingehalt, bezogen auf die Trockenmasse, im Bereich von 40 % bis weniger als 70 %, vorzugsweise zwischen 50 % und 60 %, hat.

8. Verfahren nach einem der Ansprüche 1 bis 7, wobei das extrahierte Ölsaatproteinkonzentrat einen Zellwandpolysaccharidgehalt, bezogen auf die Trockenmasse, im Bereich von 5 % bis 70 % hat.

9. Verfahren nach einem der Ansprüche 1 bis 8, wobei der Schritt der Texturierung durch Extrusion und/oder durch Scherzellentechnologie durchgeführt wird.

10. Verfahren nach einem der Ansprüche 1 bis 9, wobei das extrahierte Ölsaatproteinkonzentrat eine Wasserhydratationskapazität von mindestens 2 Gramm Wasser pro Gramm Trockenmasse des extrahierten Ölsaatproteinkonzentrats, vorzugsweise mindestens 3 Gramm Wasser pro Gramm Trockenmasse des extrahierten Ölsaatproteinkonzentrats, hat.

11. Faserige proteinhaltige Struktur, die aus einem Proteinkonzentrat erzeugt wird, das aus einem Brassicaceae-Ölsaatpresskuchen gewonnen wird, extrahiert mit mindestens zwei aufeinanderfolgenden wasserhaltigen alkoholischen Lösungsmitteln mit steigenden Alkoholkonzentrationen, aber nicht extrahiert mit einem unpolaren Lösungsmittel wie Hexan, mit einer Zugspannung zwischen 50 und 600 kPa und einer Zugdehnung zwischen 0,1 und 1.

12. Die faserige proteinhaltige Struktur, erzeugt aus extrahiertem Ölsaatproteinkonzentrat gemäß Anspruch 11, mit einem Young-Modul zwischen 600 und 1000 kPa.

13. Die faserige proteinhaltige Struktur, erzeugt aus extrahiertem Ölsaatproteinkonzentrat gemäß Anspruch 11 oder 12, das ein Anisotropieverhältnis von größer als 1, vorzugsweise größer als 1,5 hat.

14. Die faserige proteinhaltige Struktur gemäß einem der Ansprüche 11 bis 13, erhältlich durch das Verfahren gemäß einem der Ansprüche 1 bis 10.

15. Ein essbares Produkt, umfassend die faserige Proteinstruktur gemäß einem der Ansprüche 11 bis 14.

16. Das essbare Produkt gemäß Anspruch 15, das ein Lebensmittel, ein Futtermittel, ein fleischähnliches Produkt, oder eine Zutat für Lebensmittel oder Futtermittel ist.

17. Verwendung der faserigen proteinhaltigen Struktur gemäß einem der Ansprüche 11 bis 14 bei der Herstellung eines essbaren Produkts, vorzugsweise bei der Herstellung eines Fleischersatzes.

## Revendications

1. Procédé pour la préparation de structures protéiques fibreuses à partir d'un tourteau de graines oléagineuses de Brassicaceae, de préférence un tourteau de colza, comprenant les étapes de

   - fourniture d'un concentré de protéines à partir dudit tourteau de graines oléagineuses extrait avec au moins deux solvants hydroalcooliques successifs ayant des concentrations d'alcool croissantes, mais non extrait avec un solvant non polaire tel que l'hexane, dans laquelle ledit tourteau a une teneur en protéines inférieure à 70 % en poids/poids à sec, et
   - texturation du concentré de protéines à une température comprise entre 130°C et 160°C.

2. Procédé selon la revendication 1, dans lequel le concentré de protéines de graines est obtenu à partir de graines oléagineuses qui sont dépelliculées, avant et/ou après extraction avec une solution hydroéthanolique.

3. Procédé selon la revendication 1 ou la revendication 2, dans lequel les graines sont pressées avant extraction du tourteau avec une solution hydro-alcoolique.

4. Procédé selon l'une quelconque des revendications 1 à 3, dans lequel le concentré de protéines de graines oléagineuses extrait a un indice de solubilité de l'azote inférieur à 40 %.

5. Procédé selon l'une quelconque des revendications 1 à 4, dans lequel le concentré de protéines de graines oléagineuses extrait est mélangé avec une solution aqueuse, de préférence de l'eau, avant texturation dudit concentré.

6. Procédé selon l'une quelconque des revendications 1 à 5, dans lequel le concentré de protéines de graines oléagineuses extrait est mélangé avec un autre matériau comestible tel qu'un matériau protéique et/ou des hydrates de carbone, avant texturation dudit concentré, de préférence avec du gluten, des protéines de chanvre, des protéines de fève des marais, des protéines de pois, des protéines de soja, et/ou des pectines.

7. Procédé selon l'une quelconque des revendications 1 à 6, dans lequel le concentré de protéines extrait a une teneur en protéines, basée sur la masse sèche, située dans la plage allant de 40 % à moins de 70 %, de préférence comprise entre 50 % et 60 %.

8. Procédé selon l'une quelconque des revendications 1 à 7, dans lequel le concentré de protéines de graines oléagineuses extrait a une teneur en polysaccharides de paroi cellulaire, basée sur la masse sèche, située dans la plage allant de 5 % à 70 %.

9. Procédé selon l'une quelconque des revendications 1 à 8, dans lequel l'étape de texturation est effectuée par extrusion et/ou par une technologie de cellule de cisaillement.

10. Procédé selon l'une quelconque des revendications 1 à 9, dans lequel le concentré de protéines de graines oléagineuses extrait a une capacité d'hydratation par l'eau d'au moins 2 grammes d'eau par gramme de concentré de protéines de graines oléagineuses extrait en masse sèche, de préférence d'au moins 3 grammes d'eau par gramme de concentré de protéines de graines oléagineuses extrait en masse sèche.

11. Structure protéique fibreuse qui est générée à partir d'un concentré de protéines qui est obtenu à partir d'un tourteau de graines oléagineuses de Brassicaceae extrait avec au moins deux solvants hydroalcooliques successifs ayant des concentrations d'alcool croissantes, mais non extrait avec un solvant non polaire tel que l'hexane, ayant une contrainte de traction comprise entre 50 et 600 kPa et une déformation de traction comprise entre 0,1 et 1.

12. Structure protéique fibreuse générée à partir d'un concentré de protéines de graines oléagineuses extrait selon la revendication 11, ayant un module de Young compris entre 600 et 1 000 kPa.

13. Structure protéique fibreuse générée à partir d'un concentré de protéines de graines oléagineuses extrait selon la revendication 11 ou 12, qui a un rapport d'anisotropie supérieur à 1, de préférence supérieur à 1,5.

14. Structure protéique fibreuse selon l'une quelconque des revendications 11 à 13, pouvant être obtenue par le procédé de l'une quelconque des revendications 1 à 10.

15. Produit comestible comprenant la structure protéique fibreuse de l'une quelconque des revendications 11 à 14.

16. Produit comestible selon la revendication 15, qui est une denrée alimentaire, un produit pour l'alimentation animale, un produit analogue à la viande, ou un ingrédient pour denrée alimentaire ou pour produit pour l'alimentation animale.

17. Utilisation de la structure protéique fibreuse de l'une quelconque des revendications 11 à 14 dans la fabrication d'un produit comestible, de préférence dans la fabrication d'un substitut de viande.

Figure 1

A)

Shear flow

B)

15.5

25.0

63.5

9.3

Parallel edge

Parallel middle

Perpendicular

EP 4 181 686 B1

Figure 2

Figure 3

|  | 120°C | 130°C | 140°C | 150°C |
|---|---|---|---|---|
| RPC[1] | Crumble structure | Crumble structure | Short fibers with gel | N.A |
| RPC[2] | Crumble structure | Crumble structure | Brittle short fibers | Elastic long fibers |

EP 4 181 686 B1

Figure 4

| | 95°C | 120°C | 130°C | 140°C |
|---|---|---|---|---|
| RPC$^1$-WG | Crumble, elastic | Crumble, elastic | Crumble, elastic | Short fibrous structure |
| RPC$^2$-WG | Crumble elastic | Crumble elastic | Elastic long fibers | Elastic long fibers |

Figure 5

Figure 6

| RPC-WG | 0:100% | 20%:80% | 35%:65% | 50%:50% |
|---|---|---|---|---|
| Fibrous structure | | | | |

| RPC-WG | 65%:35% | 80%:20% | 100%:0 |
|---|---|---|---|
| Fibrous structure | | | |

Figure 7

EP 4 181 686 B1

Figure 8

A

Figure 8 (continued)

B

Figure 9

A) RPC2:120°C          B) RPC2-WG: 120°C          C) RPC2:140°C

D) RPC2: 150°C          E) RPC2-WG: 95°C          F) RPC2-WG: 140°C

Figure 10

Figure 10 (continued)

B

Figure 11

A

**Anisothermal-CCR (40%DM)**

B

**Isothermal-CCR (40% DM)**

Figure 12

A

B

Figure 13

Figure 14

A

B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9351514 B
- EP 0010798 A1
- US 2682466 A
- NL 1019816 C

### Non-patent literature cited in the description

- **IVANOVA et al.** *Agricul Science Proc*, 2016, vol. 10, 55-62
- **GEORGE** ; **LOESER**. *USDA*, 2019
- **LAGUNA et al.** *Industrial Crops Products*, 2018, vol. 118, 160-172
- **BOS et al.** *J Nutrition*, 2007, vol. 137, 594-600
- **CITEAU et al.** *OCL*, 2019, vol. 26, 1-5
- **BÉROT et al.** *J Chrom B*, 2005, vol. 818, 35-42
- **WU** ; **MUIR**. *J Food Science*, 2008, vol. 73, C210-C216
- **YANG et al.** *Hydrocolloids*, 2014, vol. 40, 225-236
- **DAS PURKAYASTHA et al.** *J Agricul Food Chem*, 2014, vol. 62, 7903-7914
- **HALD C. et al.** *J Agric Food Chem*, 2019, vol. 67, 372-379
- **ALU'DATT et al.** *Food Chem*, 2014, vol. 146, 608-613
- **TAN et al.** *J Food Science*, 2011, vol. 76, R16-28
- **CARRÉ et al.** *OCL*, 2016, vol. 23, A302
- **TAN et al.** *Food Res Int*, 2011, vol. 44, 1075-1082
- **DONG et al.** *J Science Food Agriculture*, 2011, vol. 91, 1488-1498
- **CAMPBELL et al.** *Plants*, 2016, vol. 5, 17
- **KOZLOWSKA et al.** *Food Nahrung*, 1983, vol. 27, 449-453
- **GONZÁLEZ-PÉREZ et al.** *J Agricul Food Chem*, 2002, vol. 50, 1713-1719
- **MATTHÄUS**. Technological Innovations in Major World Oil Crops. Springer Science and Business Media, LLC, 2012, vol. 2, 23-92
- **UNGER**. Commercial Processing of Canola and Rapeseed: Crushing and Oil Extraction. Springer, 1990, 235-249
- Technological Innovations in Major World Oil Crops. NY Springer Science and Business Media, LLC, vol. 2, 23-92
- Technological Innovations in Major World Oil Crops. NY Springer Science and Business, vol. 2
- **AGUILERA** ; **STANLEY**. *Food Rev Int*, 1993, vol. 9, 527-550
- **CHEFTEL et al.** *Food Rev Int*, 1992, vol. 8, 235-275
- **THIEBAUD et al.** *Food Science Technol*, 1996, vol. 29, 526-535
- **LIU et al.** *Food Sci Techn Int*, 2005, vol. 11, 463-470
- **GALLANT et al.** *Food Microstructure*, 1984, vol. 3, 175-183
- **DOWNEY** ; **BURGESS**. *J Food Techn*, 1979, vol. 14, 21-31
- **DOWNEY** ; **BURGESS**. *J Food Techn*, 1979, vol. 14, 33-40
- **ANTONOV et al.** *Die Nahrung*, 1985, vol. 29, 39
- **SUCHKOV et al.** *Nahrung-Food*, 1980, vol. 24, 893-897
- **SUCHKOV et al.** *Nahrung-Food*, 1988, vol. 32, 669-678
- **SUCHKOV et al.** *Nahrung-Food*, 1988, vol. 32, 679-689
- **DEKKERS et al.** *Food Res Int*, 2018, vol. 107, 281-288
- **GRABOWSKA et al.** *J Food Engin*, 2016, vol. 188, 77-86
- **SCHREUDERS et al.** *J Food Engin*, 2019, vol. 261, 32-39
- **CHOUNG** ; **CHO**. *J Mechanical Science Technol*, 2008, vol. 22, 1039-1051
- **RAHEEM**. ASTM Intern. 2014, vol. 82, 1-15